# EUROPEAN PATENT APPLICATION

(11) **EP 4 575 696 A2**
(43) Date of publication of application: **25.06.2025**
(21) Application number: 24216984.5
(22) Date of filing: 03.12.2024
(51) Int. Cl.: G05D 1/24, G05D 1/242, G05D 1/698, G05D 105/15, G05D 107/20, G05D 109/10, H04N 5/00, A01B 69/00, G05D 1/224

(54) **DISPLAY CONTROL METHOD, DISPLAY CONTROL PROGRAM, AND DISPLAY CONTROL SYSTEM**

(30) Priority: 21.12.2023 JP 2023215570; 04.09.2024 JP 2024152046
(71) Applicant: Yanmar Holdings Co., Ltd., Osaka-shi, Osaka (JP)
(72) Inventor: NISHIBEPPU, Shinya, Okayama-shi (JP); NISHII, Yasuto, Okayama-shi (JP); MURAYAMA, Masaaki, Okayama-shi (JP)
(74) Representative: Sekiguchi, Kazuya

(57) **Abstract**

[Problem] To provide a display control method, a display control program, and a display control system that are capable of improving the convenience of an operation terminal that displays information related to a work vehicle capable of autonomous travel.

[Solution] A display processing unit 212 of an operation terminal 20 causes a first screen of the operation terminal 20 to display a preregistered work vehicle 10 so as to be selectable by a user, and causes a second screen of the operation terminal 20 to display predetermined information related to the work vehicle 10 that has been selected by the user.

## Description

### TECHNICAL FIELD

The present invention relates to a technique of displaying information related to a work vehicle capable of autonomous travel.

### BACKGROUND ART

Conventionally, there is known a technique that causes a work vehicle to autonomously travel in a work area according to a target route that has been set in advance. Furthermore, there is also known a technique that remotely monitors a work vehicle during autonomous travel (for example, see Patent Document 1).

### PRIOR ART DOCUMENT

### PATENT DOCUMENT

Patent Document 1: Japanese Patent No. 6253678

### SUMMARY OF INVENTION

### TECHNICAL PROBLEM

In the conventional technique, for example, when there are a plurality of work vehicles subjected to monitoring, it becomes difficult for an operator to acquire the necessary information about each work vehicle, and a problem occurs in that the convenience of an operation terminal displaying information related to the work vehicles decreases.

An object of the present invention is to provide a display control method, a display control program, and a display control system that are capable of improving the convenience of an operation terminal that displays information related to work vehicles capable of autonomous travel.

### SOLUTION TO PROBLEM

A display control method according to the present invention is a method of controlling display information of an operation terminal, the method comprising: causing a first screen of the operation terminal to display a preregistered work vehicle so as to be selectable by a user; and causing a second screen of the operation terminal to display predetermined information related to the work vehicle that has been selected by the user.

Furthermore, a display control method according to the present invention is a method that controls display information of an operation terminal, the method including: causing a first screen of the operation terminal to display a preregistered work vehicle; and causing a second screen of the operation terminal to display predetermined information related to the work vehicle if the work vehicle performing autonomous travel has detected an obstacle, or if the work vehicle autonomously travels in a specific area.

In addition, a display control program according to the present invention is a program that controls display information of an operation terminal, the program causing one or more processors to execute the steps of: causing a first screen of the operation terminal to display a preregistered work vehicle so as to be selectable by a user; and causing a second screen of the operation terminal to display predetermined information related to the work vehicle that has been selected by the user.

Moreover, a display control system according to the present invention is a system that controls display information of an operation terminal. The display control system includes: a first display processing unit that causes a first screen of the operation terminal to display a preregistered work vehicle so as to be selectable by a user; and a second display processing unit that causes a second screen of the operation terminal to display predetermined information related to the work vehicle that has been selected by the user.

### ADVANTAGEOUS EFFECTS OF INVENTION

According to the present invention, it is possible to provide a display control method, a display control program, and a display control system that are capable of improving the convenience of an operation terminal that displays information related to a work vehicle capable of autonomous travel.

### BRIEF DESCRIPTION OF DRAWINGS

FIG. 1 is a block diagram showing a configuration of an autonomous travel system according to an embodiment of the present invention.
FIG. 2 is an external view of an example of a work vehicle according to the embodiment of the present invention.
FIG. 3 is a diagram showing an example of a selection screen displayed on an operation terminal according to the embodiment of the present invention.
FIG. 4 is a diagram showing an example of a selection screen displayed on the operation terminal according to the embodiment of the present invention.
FIG. 5 is a diagram showing an example of a selection screen displayed on the operation terminal according to the embodiment of the present invention.
FIG. 6A is a diagram showing an example of an information display screen displayed on the operation terminal according to the embodiment of the present invention.
FIG. 6B is a diagram showing an example of an information display screen displayed on the operation terminal according to the embodiment of the present invention.
FIG. 6C is a diagram showing an example of an information display screen displayed on the operation terminal according to the embodiment of the present invention.
FIG. 7 is a diagram showing an example of a selection screen and an information display screen displayed on the operation terminal according to the embodiment of the present invention.
FIG. 8 is a flowchart showing an example of the procedure of display control processing executed by the autonomous travel system according to the embodiment of the present invention.
FIG. 9 is a diagram showing an example of a selection screen and an information display screen displayed on the operation terminal according to the embodiment of the present invention.
FIG. 10 is a diagram showing an example of a selection screen and an information display screen displayed on the operation terminal according to the embodiment of the present invention.
FIG. 11 is a diagram showing an example of an information display screen displayed on the operation terminal according to the embodiment of the present invention.
FIG. 12 is a diagram showing an example of a selection screen displayed on the operation terminal according to the embodiment of the present invention.
FIG. 13 is a diagram showing an example of a selection screen displayed on the operation terminal according to the embodiment of the present invention.
FIG. 14 is a block diagram showing a configuration of a remote monitoring system according to the embodiment of the present invention.
FIG. 15 is a schematic diagram showing a remote operation being performed on the remote monitoring system according to the embodiment of the present invention.
FIG. 16 is an external view of an operation unit of a remote operation device according to the embodiment of the present invention.
FIG. 17A is an example of an operation screen of the operation terminal of the remote monitoring system according to the embodiment of the present invention.
FIG. 17B is an example of an operation screen of the operation terminal of the remote monitoring system according to the embodiment of the present invention.
FIG. 18 is an example of a display screen of the remote operation device according to the embodiment of the present invention.
FIG. 19 is an example of a display screen (front image) of the remote operation device according to the embodiment of the present invention.

### DESCRIPTION OF EMBODIMENTS

The following embodiment is a concrete example of the present invention, and is not intended to limit the technical scope of the present invention.

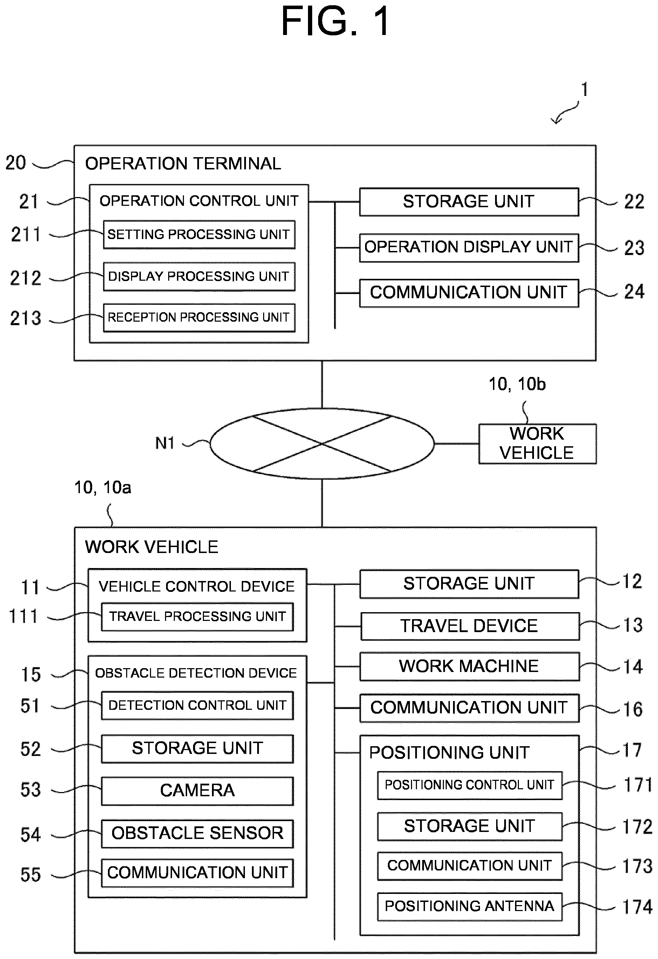

As shown in FIG. 1, an autonomous travel system 1 according to an embodiment of the present invention includes work vehicles 10 and an operation terminal 20. The number of work vehicles 10 may be one or more. In the present embodiment, a case where the autonomous travel system 1 includes a plurality of work vehicles 10 (in FIG. 1, two work vehicles 10a and 10b) will be described as an example. Note that, in the following, when the work vehicle 10a and the work vehicle 10b are not distinguished, they are referred to as a "work vehicle 10".

The work vehicle 10 and the operation terminal 20 can communicate with each other via a communication network N1. For example, the work vehicle 10 and the operation terminal 20 can communicate via a mobile phone line network, a packet line network, or a wireless LAN.

In the present embodiment, a case where the work vehicle 10 is a tractor will be described as an example. Note that, as another embodiment, the work vehicle 10 may be a combine harvester, a rice transplanter, a dispersion machine, a construction machine, a snowplow, or the like. Furthermore, the work vehicle 10a and the work vehicle 10b may be vehicles of different types, or may be vehicles of the same type. The work vehicle 10 has a configuration that enables autonomous travel (automatic travel) inside a work area of a field according to a target route that has been set in advance. In addition, the work vehicle 10 is capable of performing predetermined work while autonomously traveling inside the work area. Also, the work vehicle 10 is configured to be capable of autonomously traveling according to an inter-field route in which a road (connecting route) that connects a plurality of fields has been set in advance.

The work vehicle 10 is capable of autonomously traveling according to a target route and an inter-field route that have been set in advance inside the field and outside the field (on a road) based on position information of a current position of the work vehicle 10, which is calculated by a positioning unit 17. Note that the work vehicle 10 may also autonomously travel with a worker on board.

For example, when a target route including a work route, a travel start position, and a travel end position are set with respect to a field, the work vehicle 10 performs predetermined work while autonomously traveling in the field according to the target route from the travel start position to the travel end position.

Furthermore, when the work vehicle 10 finishes working in one field, the work vehicle 10 can move to another field to perform work. For example, when the work vehicle 10 finishes working in a first field, the work vehicle 10 moves to a second field by autonomously traveling on an inter-field route that has been set in advance on a road. When the work vehicle 10 arrives at the second field, the work vehicle 10 performs predetermined work while autonomously traveling in the second field according to a target route that has been set in advance.

The target route in a field is set as appropriate according to the work content. Moreover, the inter-field route on a road is set in advance according to an operation (teaching operation) by an operator. The inter-field route may be a road exclusively for work vehicles, such as a farm road, a forest road, a public road, a private road, or a motorway, or may be a road that can be driven by general vehicles (such as passenger cars).

The operation terminal 20 is an information processing device that displays various information related to the work vehicles 10. For example, the operation terminal 20 displays, for the preregistered work vehicles 10, position information of the current position, a travel status, a work status, and the like. The user (operator or monitoring person) of the operation terminal 20 is capable of remotely monitoring the work vehicles 10 by confirming the information.

### [Work Vehicle 10]

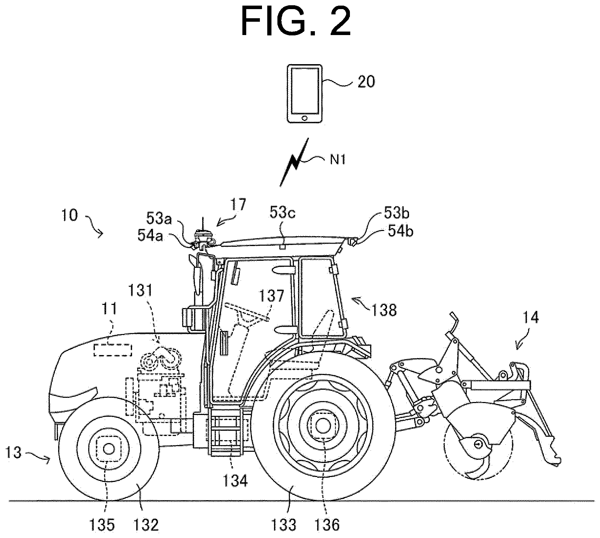

As shown in FIGS. 1 and 2, the work vehicle 10 includes a vehicle control device 11, a storage unit 12, a travel device 13, a work machine 14, an obstacle detection device 15, a communication unit 16, a positioning unit 17, and the like. The vehicle control device 11 is electrically connected to the storage unit 12, the travel device 13, the work machine 14, the obstacle detection device 15, the positioning unit 17, and the like. Note that the vehicle control device 11 and the obstacle detection device 15 may be capable of wirelessly communicating with each other, and the vehicle control device 11 and the positioning unit 17 may be capable of wirelessly communicating with each other.

The communication unit 16 is a communication interface that connects the work vehicle 10 to the communication network N1 in a wired or wireless manner, and is for executing data communication according to a predetermined communication protocol with external devices (such as the operation terminal 20) via the communication network N1.

The storage unit 12 is a non-volatile storage unit such as a hard disk drive (HDD) or a solid state drive (SSD) that stores various types of information. The storage unit 12 stores a control program such as an autonomous travel program that causes the vehicle control device 11 to execute autonomous travel processing. For example, the autonomous travel program is non-transiently recorded on a computer-readable recording medium such as a CD or a DVD, which is read by a predetermined reading device (not illustrated) and then stored in the storage unit 12. The autonomous travel program may be downloaded from a server (not illustrated) to the work vehicle 10 through the communication network N1 and stored in the storage unit 12. In addition, data related to the target route and the like is stored in the storage unit 12.

The travel device 13 is a drive unit that causes the work vehicle 10 to travel. As shown in FIG. 2, the travel device 13 includes an engine 131, front wheels 132, rear wheels 133, a transmission 134, a front axle 135, a rear axle 136, a steering wheel 137, and the like. Note that the front wheels 132 and the rear wheels 133 are provided on both the left and right of the work vehicle 10. Furthermore, the travel device 13 is not limited to a wheel-type device that includes the front wheels 132 and the rear wheels 133, and may be a crawler-type device including crawlers provided on the left and right of the work vehicle 10.

The engine 131 is a drive source such as a diesel engine or a gasoline engine that is driven using fuel supplied to a fuel tank (not illustrated). The travel device 13 may include an electric motor as a drive source in addition to the engine 131, or instead of the engine 131. Note that an electric generator (not illustrated) is connected to the engine 131, and electric power is supplied from the electric generator to electric components provided in the work vehicle 10, such as the vehicle control device 11, the obstacle detection device 15, and the positioning unit 17, and a battery and the like. The battery is charged by the electric power supplied from the electric generator. Further, the electric components provided in the work vehicle 10, such as the vehicle control device 11, the obstacle detection device 15, and the positioning unit 17 can be driven by electric power from the battery even after the engine 131 is stopped.

The driving force of the engine 131 is transmitted to the front wheels 132 via the transmission 134 and the front axle 135, and is transmitted to the rear wheels 133 via the transmission 134 and the rear axle 136. Furthermore, the drive force of the engine 131 is also transmitted to the work machine 14 via a PTO shaft (not illustrated). When the work vehicle 10 autonomously travels, the travel device 13 performs travel motions according to commands from the vehicle control device 11. In addition, the travel device 13 causes the work vehicle 10 to perform decelerated travel, or to stop, according to commands from the vehicle control device 11.

The work machine 14 is, for example, a cultivator, a mower, a plow, a fertilizer applicator, a sprayer (chemical dispersion machine), a puddling machine, or a seeding machine, and can be detachably mounted on the work vehicle 10. This allows the work vehicle 10 to perform various types of work by using various work machines 14. FIG. 2 shows a case in which the work machine 14 is a cultivator.

The steering wheel 137 is an operation unit that is operated by the worker, or by the vehicle control device 11. For example, in the travel device 13, the angle of the front wheels 132 is changed by a hydraulic power steering mechanism (not illustrated) or the like in response to an operation of the steering wheel 137 by the vehicle control device 11, thereby changing the travel direction of the work vehicle 10.

In addition to the steering wheel 137, the travel device 13 includes a shift lever, an accelerator, a brake, and the like (not illustrated) that are operated by the vehicle control device 11. Further, in the travel device 13, the gear of the transmission 134 is switched to a forward gear, a reverse gear, or the like in response to operation of the shift lever by the vehicle control device 11, which switches the travel mode of the work vehicle 10 to forward travel, reverse travel, or the like. Moreover, the vehicle control device 11 also controls the rotation speed of the engine 131 by operating the accelerator. Also, the vehicle control device 11 operates the brake to stop the rotation of the front wheels 132 and the rear wheels 133 by using an electromagnetic brake.

The positioning unit 17 is a communication device that includes a positioning control unit 171, a storage unit 172, a communication unit 173, and a positioning antenna 174. For example, as shown in FIG. 2, the positioning unit 17 is provided in an upper part of a cabin 138 in which the worker boards. Furthermore, the installation position of the positioning unit 17 is not limited to the cabin 138. Also, the positioning control unit 171, the storage unit 172, the communication unit 173, and the positioning antenna 174 of the positioning unit 17 may be distributed and arranged in different positions of the work vehicle 10. Note that, as mentioned above, the battery is connected to the positioning unit 17, and the positioning unit 17 can be operated even when the engine 131 is stopped. In addition, for example, as the positioning unit 17, a mobile phone terminal, a smartphone, a tablet terminal, a quantum compass, or the like, may be used instead.

The positioning control unit 171 is a computer system that includes one or more processors, and storage memory such as a non-volatile memory and a RAM. The storage unit 172 is a non-volatile memory or the like that stores a program for causing the positioning control unit 171 to execute positioning processing, and data such as positioning information and movement information. For example, the program is non-temporarily recorded in a computer-readable recording medium such as a CD or a DVD, read by a predetermined reading device (not illustrated), and then stored in the storage unit 172. Note that the program may be downloaded from a server (not illustrated) to the positioning unit 17 via the communication network N1, and then stored in the storage unit 172.

The communication unit 173 is a communication interface that connects the positioning unit 17 to the communication network N1 in a wired or wireless manner, and is for executing data communication according to a predetermined communication protocol with an external device, such as a base station server, via the communication network N1.

The positioning antenna 174 is an antenna that receives radio waves (GNSS signals) transmitted from satellites.

The positioning control unit 171 calculates the current position of the work vehicle 10 based on GNSS signals that are received from the satellites by the positioning antenna 174. For example, in a case where the work vehicle 10 autonomously travels in a field, when the positioning antenna 174 receives radio waves (such as a transmission time and orbit information) transmitted from each of the plurality of satellites, the positioning control unit 171 calculates a distance between the positioning antenna 174 and each satellite, and calculates the current position (latitude and longitude) of the work vehicle 10 based on the calculated distances. Furthermore, the positioning control unit 171 may perform positioning by a real-time kinematic method (RTK-GNSS positioning method (RTK method)), in which the current position of the work vehicle 10 is calculated using correction information corresponding to a base station (reference station) close to the work vehicle 10. In this way, the work vehicle 10 autonomously travels using positioning information obtained using the RTK method. Note that the current position of the work vehicle 10 may be the same position as the positioning position (for example, the position of the positioning antenna 174), or may be a position that is offset from the positioning position. The positioning control unit 171 may use a quantum compass to perform calculation (positioning) of the current position of the work vehicle 10.

When the work vehicle 10 detects a detection target during autonomous travel, the obstacle detection device 15 outputs detection information (measurement information) to the vehicle control device 11. Specifically, the obstacle detection device 15 includes a detection control unit 51, a storage unit 52, a camera 53, an obstacle sensor 54, a communication unit 55, and the like. The obstacle detection device 15 may be configured as a single unit and installed on the work vehicle 10, or a plurality of components may be distributed and arranged in the work vehicle 10.

The communication unit 55 is a communication interface that connects the obstacle detection device 15 to the communication network N1 in a wired or wireless manner, and is for executing data communication according to a predetermined communication protocol with an external device (such as the operation terminal 20) via the communication network N1.

The storage unit 52 is a non-volatile storage unit such as an HDD or an SSD that stores various types of information. The storage unit 52 stores control programs such as an obstacle detection program for causing the obstacle detection device 15 to execute obstacle detection processing. For example, the obstacle detection program is non-transiently recorded in a computer-readable recording medium such as a CD or a DVD, is read by a predetermined reading device (not illustrated), and then stored in the storage unit 52. Note that the obstacle detection program may be downloaded from a server (not illustrated) to the obstacle detection device 15 via the communication network N1, and then stored in the storage unit 52.

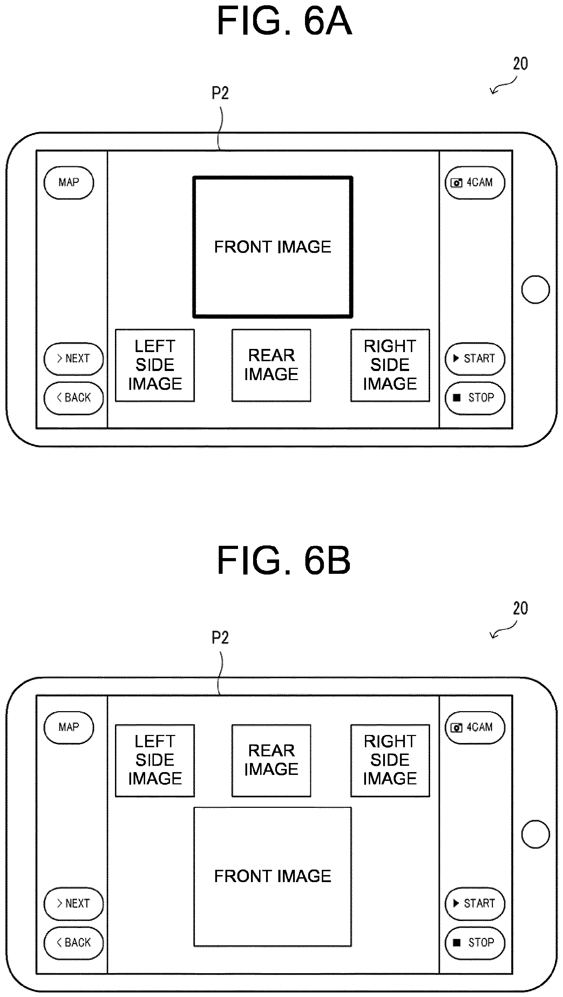

The camera 53 is a digital camera that captures an image of a subject included in a predetermined imaging range, and outputs the image as digital image data. The camera 53 continuously captures images of a subject at a predetermined frame rate, generates frame images (capture images) at a predetermined resolution, and sequentially transmits the frame images to the detection control unit 51. Furthermore, the camera 53 transmits the image data of the capture images to the operation terminal 20 via the communication unit 55. The operation terminal 20 is capable of displaying the capture images on an operation screen of an operation display unit 23 (see FIG. 6A and the like).

The camera 53 includes a front camera 53a that is capable of capturing an imaging range at the front when viewed from the work vehicle 10, a rear camera 53b that is capable of capturing an imaging range at the rear when viewed from the work vehicle 10, a left side camera 53c that is capable of capturing an imaging range on the left side when viewed from the work vehicle 10, and a right side camera 53d that is capable of capturing an imaging range on the right side when viewed from the work vehicle 10 (not illustrated). As shown in FIG. 2, the front camera 53a is arranged on the upper front side of the cabin 138, and the rear camera 53b is arranged on the upper rear side of the cabin 138, the left side camera 53c is arranged on the upper left side of the cabin 138, and the right side camera 53d is arranged on the upper right side of the cabin 138. Note that the camera 53 may be configured by only the front camera 53a and the rear camera 53b. In addition, the camera 53 may be configured by a single camera, and may be an omnidirectional camera that is capable of capturing images in all directions around the work vehicle 10.

The obstacle sensor 54 is a sensor that detects a detection target in a predetermined detection range using infrared rays, ultrasonic waves, or the like. For example, the obstacle sensor 54 may be a lidar sensor (distance sensor) capable of three-dimensionally measuring the distances to a detection target using a laser, or a sonar sensor including a plurality of sonars that are capable of measuring the distance to a detection target using ultrasonic waves. The obstacle sensor 54 is installed on a front center portion and a rear center portion of the work vehicle 10, and detects obstacles by monitoring the surroundings of the work vehicle 10. In the present embodiment, an example will be described in which the obstacle sensor 54 includes a front obstacle sensor 54a capable of detecting a detection target in a detection range at the front and sides (left and right) when viewed from the work vehicle 10, and a rear obstacle sensor 54b capable of detecting a detection target in a detection range at the rear and sides (left and right) when viewed from the work vehicle 10. As shown in FIG. 2, the front obstacle sensor 54a is arranged on the upper front side of the cabin 138, and the rear obstacle sensor 54b is arranged on the upper rear side of the cabin 138. The front obstacle sensor 54a and the rear obstacle sensor 54b are capable of detecting a detection target in a 360-degree detection range around the work vehicle 10. The front camera 53a and the front obstacle sensor 54a may be configured as a single unit, and the rear camera 53b and the rear obstacle sensor 54b may be configured as a single unit. Note that the obstacle sensor 54 may include a left side obstacle sensor capable of detecting a detection target in a detection range on the left side when viewed from the work vehicle 10, and a right side obstacle sensor capable of detecting a detection target in a detection range on the right side when viewed from the work vehicle 10.

The obstacle sensor 54, for example, measures the distance to each range point (measurement target) that exists in the measurement range using a laser (such as an infrared laser beam), and generates a distance image or the like based on the measurement information. The obstacle sensor 54 includes an electronic control unit in which a microcontroller and the like are integrated, and a processing unit that is constructed by various control programs and the like. The obstacle sensor 54 is connected to the detection control unit 51, the vehicle control device 11, and the like, via a CAN so as to enable mutual communication.

The obstacle sensor 54 measures the distances from the obstacle sensor 54 to range points in a measurement range using a time of flight (TOF) method, which measures the distance to a range point based on a round trip time of an irradiated laser to reach, and then return from, the range point. The obstacle sensor 54 performs three-dimensional measurements in the measurement range by scanning a laser vertically and horizontally at high speed over the entire measurement range, and sequentially measuring the distances to the range points at each scanning angle (coordinate). The obstacle sensor 54 sequentially measures the intensity of the reflected light (reflection intensity) from each range point that is obtained when a laser is scanned vertically and horizontally at high speed over the entire measurement range. The obstacle sensor 54 repeatedly measures the distances to the range points in the measurement range, the reflection intensities, and the like, in real time.

The obstacle sensor 54 generates a distance image and extracts a range point group that has been estimated to represent an obstacle from the measurement information, such as the measured distances to the range points and the scanning angle (coordinate) with respect to the range points, and transmits the measurement information relating to the extracted range point group to the detection control unit 51 as the measurement information relating to an obstacle.

Furthermore, in the measurement range (detection range) of the obstacle sensor 54, control ranges are set that depend on the distance from the work vehicle 10. For example, in the measurement range, a range that is a distance L1 from the work vehicle 10 is set as a stopping control range, a range from the distance L1 to a distance L2 is set as a deceleration control range, and a range from the distance L2 to a distance L3 is set as a notification control range (where L1 < L2 < L3). Each control range can be set according to the type, model, work content, vehicle speed, and the like, of the work vehicle 10. In addition, the control ranges can be switched depending on the travel direction of the work vehicle 10. For example, the detection control unit 51 sets the control ranges on the front side of the vehicle body when the work vehicle 10 is traveling forward, and sets the control ranges on the rear side of the vehicle body when the work vehicle 10 is traveling backward.

The detection control unit 51 outputs the measurement information acquired from the obstacle sensor 54 to the vehicle control device 11. The detection control unit 51 sequentially outputs the measurement information to the vehicle control device 11 each time the detection control unit 51 acquires the measurement information from the obstacle sensor 54 while the work vehicle 10 is autonomously traveling. As another embodiment, the detection control unit 51 may determine the type (such as a person, a vehicle, a structure, or materials) of a detection target (measurement target) based on the capture images acquired from the camera 53 and the measurement information acquired from the obstacle sensor 54, and output the determination result to the vehicle control device 11.

The vehicle control device 11 includes control devices such as a CPU, a ROM, and a RAM. The CPU is a processor that executes various types of arithmetic processing. The ROM is a non-volatile storage unit that stores, in advance, control programs such as a BIOS and an OS for causing the CPU to execute the various types of the arithmetic processing. The RAM is a volatile or non-volatile storage unit that stores various types of information, and is used as a temporary storage memory for various types of processing executed by the CPU. Further, the vehicle control device 11 controls the work vehicle 10 by causing the CPU to execute various control programs stored in advance in the ROM or the storage unit 12.

Specifically, as shown in FIG. 1, the vehicle control device 11 includes various processing units such as a travel processing unit 111. The vehicle control device 11 causes the CPU to perform various types of processing according to the autonomous travel program to function as the various processing units. Furthermore, some or all of the processing units may be configured by electronic circuits. The autonomous travel program may be a program for causing a plurality of processors to function as the processing units.

The travel processing unit 111 controls the travel of the work vehicle 10. For example, when the travel mode of the work vehicle 10 is autonomous travel (autonomous travel mode), the travel processing unit 111 causes the work vehicle 10 to autonomously travel based on the position information (positioning information) indicating the current position of the work vehicle 10, which is positioned by the positioning unit 17. For example, when the work vehicle 10 satisfies an autonomous travel start condition, and a travel start instruction is acquired from the worker, the travel processing unit 111 causes the work vehicle 10 to start autonomously traveling based on the positioning information. For example, the travel processing unit 111 causes the work vehicle 10 to autonomously travel from a travel start position to a travel end position according to a target route that has been generated and set in advance in the operation terminal 20.

Note that, when the travel mode of the work vehicle 10 is manual travel (manual travel mode), it is possible to make the work vehicle 10 manually travel based on operations made by the worker (manual steering). For example, the travel processing unit 111 acquires operation information that corresponds to driving operations performed by the worker, such as steering wheel operations, speed change operations, travel direction switching operations, and braking operations, and causes the travel device 13 to execute travel motions based on the operation information.

Furthermore, the travel processing unit 111 causes the work vehicle 10 to execute predetermined countermeasure processing when the work vehicle 10 detects an obstacle during autonomous travel. Specifically, the travel processing unit 111 causes the work vehicle 10 to emit a warning sound when an obstacle is detected in the notification control range. In addition, the travel processing unit 111 causes the work vehicle 10 that is autonomously traveling to decelerate from a vehicle speed set in advance when an obstacle is detected in the deceleration control range. Also, the travel processing unit 111 causes the work vehicle 10 that is autonomously traveling to temporarily stop when an obstacle is detected in the stopping control range. Note that the travel processing unit 111 may cause the work vehicle 10 to execute countermeasure processing according to the type of detection target that has been detected by the obstacle detection device 15.

Moreover, the travel processing unit 111 controls the travel according to instructions acquired from the operation terminal 20. For example, when a travel start instruction is acquired from the operation terminal 20, the travel processing unit 111 causes the work vehicle 10 to start autonomously traveling, and when a travel stop instruction is acquired from the operation terminal 20, the travel processing unit 111 causes the work vehicle 10 to stop autonomously traveling.

### [Operation Terminal 20]

As shown in FIG. 1, the operation terminal 20 is an information processing device including an operation control unit 21, a storage unit 22, an operation display unit 23, a communication unit 24, and the like. For example, the operation terminal 20 is configured by a mobile terminal such as a smartphone (see FIG. 2 and the like), or a tablet terminal. Note that the operation terminal 20 may be a stationary (desktop) personal computer.

The communication unit 24 is a communication interface that connects the operation terminal 20 to the communication network N1 in a wired or wireless manner, and is for executing data communication according to a predetermined communication protocol with an external device, such as one or more work vehicles 10, via the communication network N1.

The operation display unit 23 is a user interface including a display unit such as a liquid crystal display or an organic EL display, which displays various information, and an operation unit such as a touch panel, a mouse, or a keyboard, which receives operations. The display unit displays a map of a predetermined area including the field, which is a work target, predetermined information related to the work vehicle 10, and the like. The predetermined information includes at least one of information related to a current surrounding environment of the work vehicle 10, information related to a current travel status of the work vehicle 10, and information related to a current work status of the work vehicle 10. The operator is capable of grasping the travel state of the work vehicle 10 that is autonomously traveling in the field, on a road, or the like, the detection result of an obstacle, and the like, from a location away from the work vehicle 10 based on the predetermined information that is displayed on the operation terminal 20. That is, the operator is capable of remotely monitoring the work vehicle 10 by using the operation terminal 20.

Furthermore, the display unit displays an operation screen on which a travel start instruction, a travel stop instruction, a travel restart instruction, and the like, can be issued to the work vehicle 10. In addition, the display unit displays a registration screen on which work vehicle information, field information, work information, and the like, are registered.

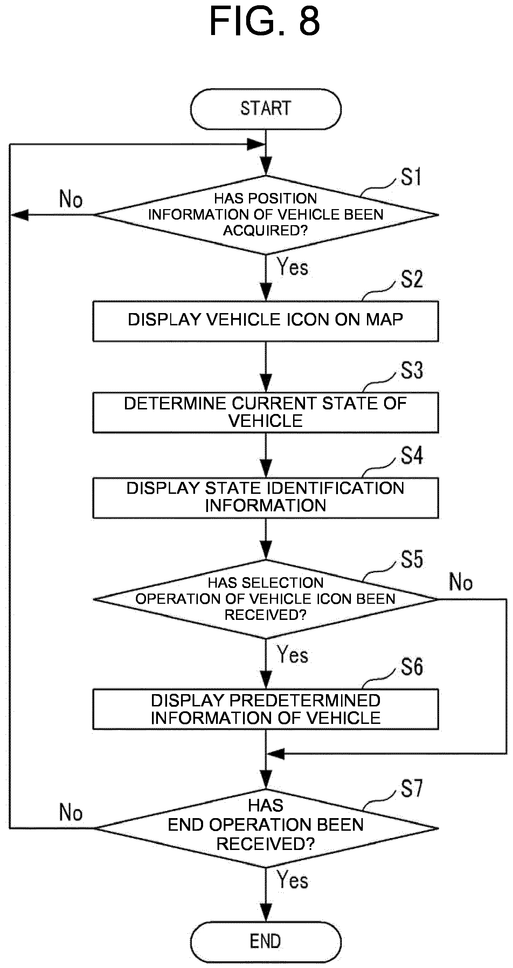

The storage unit 22 is a non-volatile storage unit such as an HDD or an SSD that stores various types of information. The storage unit 22 stores a control program such as a display control program for causing the operation control unit 21 to execute a display control processing (see FIG. 8) described later. For example, the control program is non-transiently recorded in a computer-readable recording medium such as a CD or a DVD, is read by a predetermined reading device (not illustrated), and then stored in the storage unit 22. Note that the control program may be downloaded from a server (not illustrated) to the operation terminal 20 via the communication network N1 and stored in the storage unit 22.

Furthermore, the storage unit 22 stores data such as work vehicle information, which is information related to the work vehicle 10, and target route information, which is information related to the target route. The work vehicle information includes information such as a vehicle number, a model, and the like, for each work vehicle 10. The vehicle number is identification information of the work vehicle 10. The model is a model of the work vehicle 10. The storage unit 22 may store the work vehicle information related to a single work vehicle 10, or may store the work vehicle information related to a plurality of work vehicles 10. In the present embodiment, the storage unit 22 stores the work vehicle information related to each of the two work vehicles 10a and 10b.

The target route information includes information such as a route name, a field name, an address, a field area, a work time, and the like, for each target route. The route name is the route name of the target route generated in the operation terminal 20. The field name is the name of the field of a work target with respect to which the target route has been set. The address is the address of the field. The field area is the area of the field. The work time is the time required for the work vehicle 10 to perform work in the field.

When the target route is a route corresponding to a road (inter-field route), the target route information includes information such as a route name, an address, a travel distance, and a travel time. The route name is the name of the road. The address is the address of the road. The travel distance is the distance that the work vehicle 10 travels on the road, and is, for example, the distance from the first field to the second field. The travel time is the time that the work vehicle 10 travels on the road, and is, for example, the time required to move from the first field to the second field.

Note that the storage unit 22 may store the target route information related to one target route, or may store the target route information related to a plurality of target routes. For example, when the operator generates a plurality of target routes with respect to one or more fields that the operator manages, the target route information related to each target route is stored in the storage unit 22. Note that, a single target route may be set, or a plurality of target routes may be set with respect to a single field. In addition, a single inter-field route may be set, or a plurality of inter-field routes may be set with respect to a set of fields. In the present embodiment, the storage unit 22 stores target route information that corresponds to the target route on which the work vehicle 10a travels in the first field, and target route information that corresponds to the target route on which the work vehicle 10b travels in the second field.

As another embodiment, some or all of the information such as the work vehicle information and the target route information may be stored in a server that is accessible from the operation terminal 20. The operator may perform operations to register the work vehicle information and the target route information in the server (such as a personal computer or a cloud server). In this case, the operation control unit 21 may acquire the information from the server and execute various processing.

The operation control unit 21 includes control devices such as a CPU, a ROM, and a RAM. The CPU is a processor that executes various types of arithmetic processing. The ROM is a non-volatile storage unit that stores, in advance, control programs such as a BIOS and an OS for causing the CPU to execute the various types of the arithmetic processing. The RAM is a volatile or non-volatile storage unit that stores various types of information, and is used as a temporary storage memory (work area) for various types of processing executed by the CPU. Then, the operation control unit 21 controls the operation terminal 20 by causing the CPU to execute various types of control programs, which are stored in advance in the ROM or the storage unit 22.

As shown in FIG. 1, the operation control unit 21 includes various processing units such as a setting processing unit 211, a display processing unit 212, and a reception processing unit 213. Note that the operation control unit 21 functions as the various processing units by causing the CPU to execute various processing according to the control programs. Furthermore, some or all of the processing units may be configured by electronic circuits. Note that the control programs may be programs that cause a plurality of processors to function as the processing units.

The setting processing unit 211 sets information related to the work vehicle 10 (hereinafter, referred to as work vehicle information), information related to the field (hereinafter, referred to as field information), and information related to the details of how the work will be performed (hereinafter, referred to as work information).

Specifically, the setting processing unit 211 sets the information as a result of the operator performing operations that register, in the operation terminal 20, information such as the model of the work vehicle 10, the position in which the positioning antenna 174 is installed on the work vehicle 10, the type of the work machine 14, the size and shape of the work machine 14, the position of the work machine 14 with respect to the work vehicle 10, the vehicle speed and engine rotation speed of the work vehicle 10 during the work, and the vehicle speed and engine rotation speed during the turning of the work vehicle 10.

Furthermore, the setting processing unit 211 sets information such as the position and the shape of the field, the work start position (travel start position) at which the work starts, the work end position (travel end position) at which the work ends, the work direction, and the like, as a result of a registration operation being performed on the operation terminal 20.

The information relating to the position and the shape of the field can be automatically acquired by, for example, the operator boarding the work vehicle 10 and driving one lap along the outer periphery of the field, and recording the change in the position information of the positioning antenna 174 at that time. In addition, the position and the shape of the field can be also acquired based on a polygon obtained as a result of the worker performing an operation on the operation terminal 20 while a map is being displayed on the operation terminal 20, and specifying a plurality of points on the map.

Furthermore, the setting processing unit 211 is also configured so as to be capable of setting, as the work information, the presence or absence of cooperative work between work vehicles 10 (unmanned tractors) and manned work vehicles 10, a skip count, being the number of work routes to be skipped in a case where the work vehicle 10 turns in a headland, the width of the headland, the width of non-cultivated land, and the like.

In addition, the setting processing unit 211 generates the target route for causing the work vehicle 10 to autonomously travel in the field based on the setting information. Specifically, the setting processing unit 211 generates the target route in the field based on the travel start position and the travel end position that have been registered in the field settings. For example, the setting processing unit 211 generates the target route including the travel start position, the travel end position, straight routes, and turning routes based on the setting operations performed by the user. The setting processing unit 211 registers the generated target route in association with the field.

The display processing unit 212 displays various information on the operation display unit 23. Specifically, the display processing unit 212 displays a selection screen P1 (a first screen of the present invention) such that the operator is capable of selecting a preregistered work vehicles 10. For example, when the operator has registered the work vehicle 10a and the work vehicle 10b, which are monitoring targets (management targets), the display processing unit 212 selectably displays the work vehicle 10a and the work vehicle 10b on the selection screen P1. The work vehicles 10 displayed on the selection screen P1 may be the work vehicles 10 whose information is registered in the operation terminal 20, or may be the work vehicles 10 among the plurality of registered work vehicles 10 that the operator has selected for starting work from now.

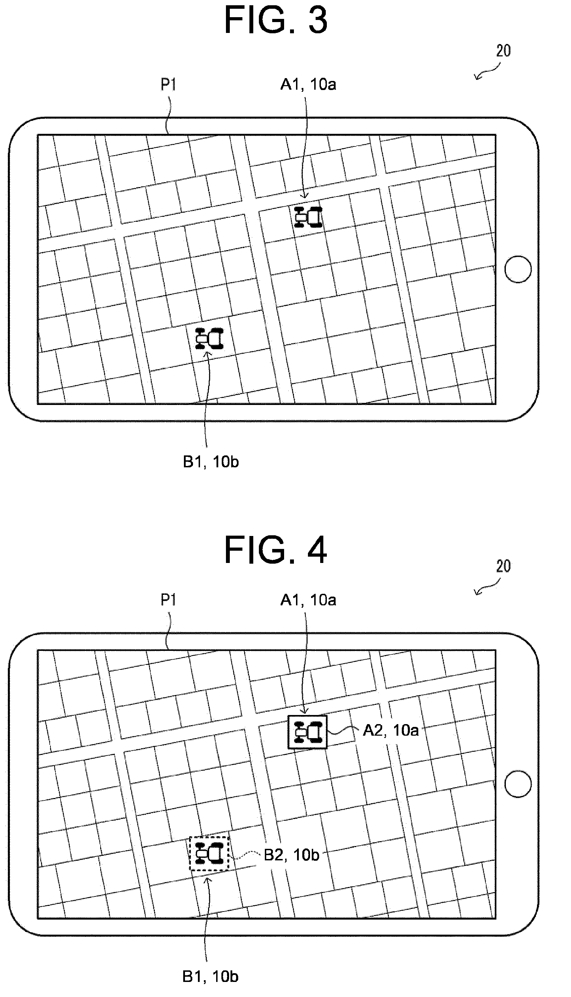

FIG. 3 shows an example of the selection screen P1. As shown in FIG. 3, the display processing unit 212 causes the selection screen P1 to display a map of a predetermined area that includes the current position of each of the work vehicle 10a and the work vehicle 10b that have been registered in advance. Furthermore, the display processing unit 212 displays, on the map, identification information of the work vehicles 10 in positions corresponding to the current positions of the work vehicles 10. Specifically, as shown FIG. 3, the display processing unit 212 displays, on the map, an icon image A1 of the work vehicle 10a in a position corresponding to the current position of the work vehicle 10a, and an icon image B1 of the work vehicle 10b corresponding to the current position of the work vehicle 10b. The display processing unit 212 acquires position information (positioning information) from the work vehicles 10 and displays icon images of the work vehicles 10 on the map. The display processing unit 212 updates the positions of the icon images on the map in real time. As another embodiment, the display processing unit 212 may display the name of the work vehicle 10a (text information) on the map instead of an icon image.

In addition, the display processing unit 212 may identifiably display the icon image A1 of the work vehicle 10a and the icon image B1 of the work vehicle 10b. For example, the display processing unit 212 may display the name of the work vehicle 10a near the icon image A1, and display the name of the work vehicle 10b near the icon image B1. Furthermore, the display processing unit 212 may display the identification information (such as the name) of the work vehicle 10a when the operator performs a touch operation or a mouseover operation with respect to the icon image A1, and display the identification information (such as the name) of the work vehicle 10b when the operator performs a touch operation or a mouseover operation with respect to the icon image B 1.

Also, the display processing unit 212 may display the map in an enlarged display or a reduced display on the selection screen P1 according to an operation that enlarges or reduces the map. Moreover, the display processing unit 212 may automatically adjust the display magnification according to the positions of the work vehicles 10, which are the monitoring targets. For example, the display processing unit 212 determines the display magnification of the map such that the icon images of all of the work vehicles 10, which are the monitoring targets, fit on a single screen (the same page).

According to the selection screen P1 shown in FIG. 3, the operator is capable of grasping the current positions of all of the work vehicles 10, which are the monitoring targets. Note that the display processing unit 212 have a configuration that causes the selection screen P1 to also display the work vehicles 10 that are not yet working and are currently stored in a storage location (such as a warehouse), or may have a configuration that does not cause the selection screen P1 to display the work vehicles 10 that are not yet working and are currently stored in a storage location. Also, the operator may be capable of setting whether or not the work vehicles 10 that are not yet working and are currently stored in a storage location are displayed on the selection screen P1.

Furthermore, the display processing unit 212 displays, on the map, identification information in a display mode corresponding to the current state of the work vehicle 10. Specifically, the display processing unit 212 identifiably displays, on the map, an icon image indicating whether the work vehicle 10 is autonomously traveling or has stopped. That is, the display processing unit 212 causes the display mode when the work vehicle 10 is autonomously traveling and the display mode when the work vehicle 10 has stopped to be different on the map. In the example shown in FIG. 4, when the work vehicle 10a has stopped, the display processing unit 212 displays the icon image A1 in a mode that indicates the work vehicle 10a has stopped. In addition, when the work vehicle 10b is autonomously traveling, the display processing unit 212 displays the icon image B1 in a mode that indicates that the work vehicle 10b is autonomously traveling. Note that the display mode may be the type, color, or thickness of the line of a frame image surrounding the icon image, the color, size, or display method (illumination or flashing) of the icon image, or the like. For example, as shown in FIG. 4, the display processing unit 212 displays a frame image A2 of the icon image A1 and a frame image B2 of the icon image B1 in display modes that are different from each other. Note that the operator may be capable of setting and changing the display mode of each icon image. For example, on a settings screen, the operator may set the frame image of an icon image indicating that autonomous travel is being performed to a first display mode, and set the frame image of an icon image indicating a stoppage has occurred to a second display mode.

As another embodiment, the display processing unit 212 may not display a frame image during the normal autonomous travel of the work vehicle 10, and display a frame image when the work vehicle 10 has stopped autonomously traveling.

Moreover, the display processing unit 212 may display a message (text information) near the icon image A1 that indicates a stopped vehicle, and a message near the icon image B1 that indicates an autonomously traveling vehicle. Furthermore, the display processing unit 212 may display a message indicating that a stoppage has occurred when the operator performs a touch operation or a mouseover operation with respect to the icon image A1, and display a message indicating that autonomous traveling is being performed when the operator performs a touch operation or a mouseover operation with respect to the icon image B1.

Note that, the work vehicle 10 stops autonomously traveling, for example, when an obstacle is detected, the work is completed, the remaining amount of spray material or fuel has fallen below a specified amount, the amount of harvested material has become greater than or equal to a specified amount, regeneration work of the diesel particulate filter (DPF) has become necessary, or when replenishment work of urea water has become necessary.

As another embodiment, when an obstacle has been detected, the display processing unit 212 may identifiably display, on the selection screen P1, identification information indicating that an obstacle has been detected. For example, when the work vehicle 10a has detected an obstacle, the display processing unit 212 illuminates or flashes the icon image A1, or displays the frame image A2 of the icon image A1 in a predetermined color. Furthermore, the display processing unit 212 may display the icon image A1 or the frame image A2 in a display mode corresponding to the detection position (control range) when the work vehicle 10a has detected an obstacle. For example, when the work vehicle 10a has detected an obstacle in the notification control range, the display processing unit 212 displays the frame image A2 in green. When the work vehicle 10a has detected an obstacle in the deceleration control range, the display processing unit 212 displays the frame image A2 in yellow. When the work vehicle 10a has detected an obstacle in the stopping control range, the display processing unit 212 displays the frame image A2 in red.

Moreover, the display processing unit 212 may display identification information on the selection screen P1 that enables the work status to be identified. For example, when the work vehicle 10a has completed the work in a field, which is the work target, the display processing unit 212 illuminates or flashes the icon image A1, or displays the frame image A2 of the icon image A1 in a predetermined color. Furthermore, for example, when the work vehicle 10a is a vehicle (dispersion machine) that disperses a spray material (such as a chemical liquid or water), and the amount of spray material remaining in the work vehicle 10a falls below a specified amount, or when a refill timing of the spray material has arrived, the display processing unit 212 illuminates or flashes the icon image A1, or displays the frame image A2 of the icon image A1 in a predetermined color. Furthermore, for example, when the work vehicle 10a is a vehicle (such as a combine harvester) that harvests a harvested material, and the amount of harvested material has become greater than or equal to a specified amount, or a discharge timing of the harvested material has arrived, the display processing unit 212 illuminates or flashes the icon image A1, or displays the frame image A2 of the icon image A1 in a predetermined color.

In this way, when the work vehicle 10 has stopped autonomously traveling, the display processing unit 212 may identifiably display the stopped state of the work vehicle 10 on the selection screen P1, and when the work vehicle 10 has stopped autonomously traveling, may display identification information on the selection screen P1 that enables the cause of the stoppage of the work vehicle 10 to be specified.

According to the selection screen P1 shown in FIG. 4, the operator is capable of grasping the current state of each of the work vehicles 10, which are the monitoring targets.

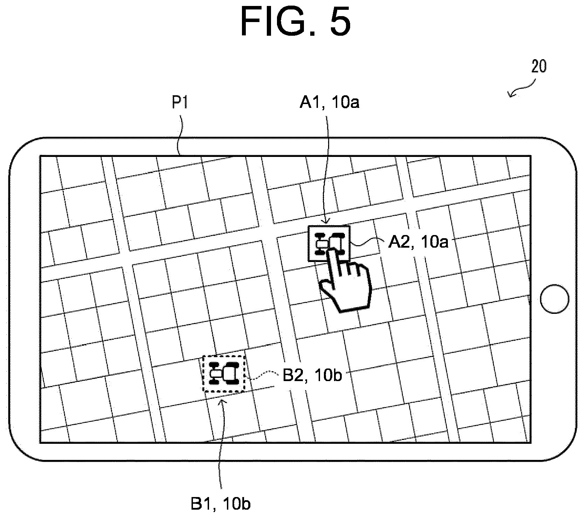

Here, the display processing unit 212 selectably displays the work vehicles 10 on the selection screen P1 (see FIGS. 3 and 4). Specifically, the display processing unit 212 selectably displays the icon images A1 and B1 on the map of the selection screen P1. The reception processing unit 213 accepts selection operations of the icon images from the operator on the selection screen P1. For example, as shown in FIG. 5, when the operator touches the icon image A1 of the work vehicle 10a displayed on the selection screen P1 using a finger, the reception processing unit 213 receives the touch operation. For example, when the operator views the selection screen P1 and grasps that the work vehicle 10a has stopped autonomously traveling, the operator touches the icon image A1 of the work vehicle 10a to confirm the reason for the stoppage.

The display processing unit 212 causes the operation display unit 23 to display predetermined information related to the work vehicle 10 that has been selected by the operator. Specifically, the display processing unit 212 causes an information display screen P2 (a second screen of the present invention) to display the predetermined information. The predetermined information includes at least one of information related to a current surrounding environment of the work vehicle 10, information related to a current travel status of the work vehicle 10, and information related to a current work status of the work vehicle 10. For example, when the operator selects the icon image A1 of the work vehicle 10a (see FIG. 5), as shown in FIG. 6A, the display processing unit 212 causes the information display screen P2 to display capture images of the surroundings of the work vehicle 10a that have been captured by the camera 53 installed on the work vehicle 10a. Here, the display processing unit 212 acquires a front image, a rear image, a left side image, and a right side image of the work vehicle 10a from the camera 53, and causes the information display screen P2 to display the images. In addition, as shown in FIG. 6A, the display processing unit 212 causes the front image to be displayed on the upper side of the information display screen P2, and the rear image, the left side image, and the right side image to be displayed on the lower side of the information display screen P2. As another embodiment, as shown in FIG. 6B, the display processing unit 212 may cause the front image to be displayed on the lower side of the information display screen P2, and the rear image, the left side image, and the right side image to be displayed on the upper side of the information display screen P2. Also, it may be possible for the arrangement, size, display/non-display of each image to be set (customized) by the operator.

Furthermore, when the work vehicle 10a detects an obstacle, the display processing unit 212 may cause the information display screen P2 to identifiably display the capture image among the plurality of capture images of the camera 53 that includes the obstacle. For example, when the obstacle sensor 54 of the work vehicle 10a detects an obstacle in front of the work vehicle 10a, as shown in FIG. 6A, the display processing unit 212 causes the front image to be displayed with emphasis on the information display screen P2.

In this way, the display processing unit 212 causes the icon image for each of the plurality of preregistered work vehicles 10 to be displayed on the map of the selection screen P1 in a display mode corresponding to the current state of the work vehicle 10 (see FIG. 5), and causes the capture images of the surroundings of the work vehicle 10 that have been captured by the camera 53 installed on the work vehicle 10 corresponding to the icon image that has been selected by the user from among the plurality of icon images on the selection screen P1 to be displayed on the information display screen P2 (see FIG. 6A).

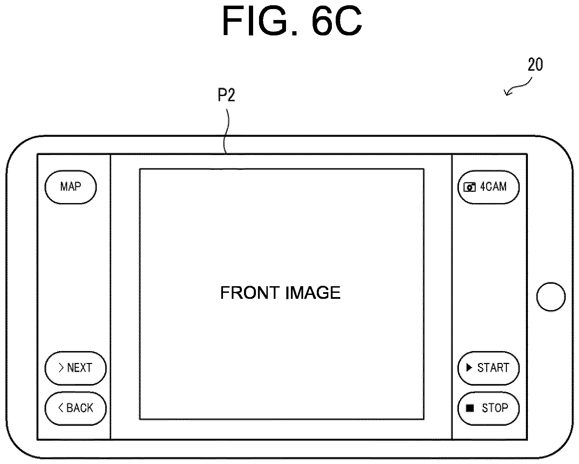

Furthermore, the display processing unit 212 causes the information display screen P2 to display switching buttons (a "NEXT" button and a "BACK" button) that switch the display screen. When the operator presses the "NEXT" button a single time, the display processing unit 212 causes the front image to be displayed with an enlarged display (see FIG. 6C). Then, when the operator presses the "NEXT" button a single time, the display processing unit 212 causes the right side image to be displayed with an enlarged display. Further, when the operator presses the "NEXT" button a single time, the display processing unit 212 causes the rear image to be displayed with an enlarged display. Next, when the operator presses the "NEXT" button a single time, the display processing unit 212 causes the left side image to be displayed with an enlarged display. The display processing unit 212 switches between the front image, the right side image, the rear image, and the left side image in this order each time the operator presses the "NEXT" button. Moreover, the display processing unit 212 switches between the front image, the left side image, the rear image, and the right side image in this order each time the operator presses the "BACK" button. In addition, when the operator presses the "4CAM" button on the information display screen P2 shown in FIG. 6C, the display processing unit 212 causes the information display screen P2 to display the capture images in the four directions (the front image, the rear image, the left side image, and the right side image) (see FIG. 6A).

Note that, on the information display screen P2 shown in FIGS. 6A to 6C, the display processing unit 212 may be capable of changing (zooming) the display magnification (field of view size) of the capture images. For example, on the information display screen P2 shown in FIG. 6C, when the operator performs a zoom-in operation (pinch out), the display processing unit 212 causes the front image to be displayed with an enlarged (zoomed-in) display. Further, when the operator performs a zoom-out operation (pinch in), the display processing unit 212 causes the front image to be displayed with a reduced (zoomed-out) display. Furthermore, the display processing unit 212 may change the capture range (capture direction) of the camera 53 according to an operation by the operator.

Also, the display processing unit 212 may display the detected obstacle in the capture image with an emphasized display by enclosing the obstacle in a frame image, tracking the obstacle, and the like. In addition, the display processing unit 212 may cause distance information to the detected obstacle, and information about the type (such as a person, a vehicle, a structure, or materials) of the obstacle to be displayed on the information display screen P2. Note that the camera 53 may be arranged such that a portion of the vehicle body of the work vehicle 10 appears to make it easier to grasp the distance to the detected obstacle.

Furthermore, the display processing unit 212 causes a "START" button and a "STOP" button to be displayed on the information display screen P2. When the operator presses the "START" button, the reception processing unit 213 receives the operation, and outputs an instruction to the work vehicle 10 that starts or restarts autonomous travel. For example, when the work vehicle 10a has detected an obstacle and has stopped autonomously traveling, the operator selects the work vehicle 10a on the selection screen P1 (see FIG. 5), and presses the "START" button once the safety of the work vehicle 10a has been confirmed on the information display screen P2. As a result, the reception processing unit 213 outputs an instruction that causes the work vehicle 10a to restart autonomous travel, and the work vehicle 10a restarts autonomous travel according to the instruction. As another embodiment, the reception processing unit 213 may allow a pressing operation of the "START" button on the condition that an obstacle is no longer detected.

Moreover, for example, when the operator selects the work vehicle 10b on the selection screen P1 while the work vehicle 10b is autonomously traveling, and presses the "STOP" button on the information display screen P2, the reception processing unit 213 outputs an instruction to the work vehicle 10b to stop autonomously traveling. As a result, the work vehicle 10b stops autonomously traveling according to the instruction.

Note that, when the operator presses the "MAP" button on the information display screen P2, the display processing unit 212 switches to the selection screen P1 (see FIG. 4). In this way, the operator is capable of switching between the selection screen P1 and the information display screen P2.

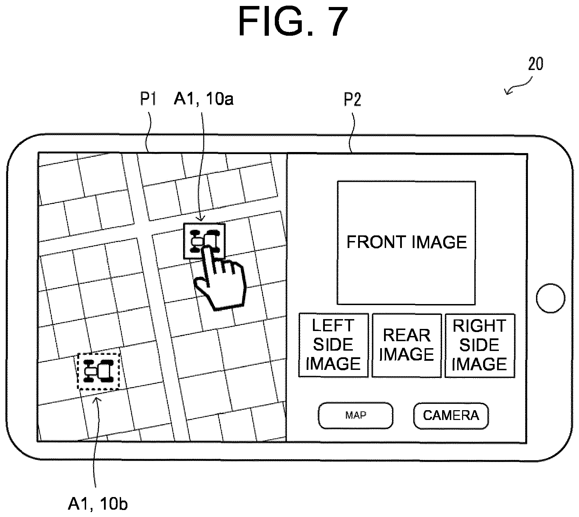

As another embodiment, the display processing unit 212 may cause the selection screen P1 and the information display screen P2 to be displayed side by side in the left-right direction or the up-down direction. For example, as shown in FIG. 7, the display processing unit 212 causes the selection screen P1 to be displayed in a display area on the left side of the operation display unit 23, and causes the information display screen P2 corresponding to the work vehicle 10a that has been selected on the selection screen P1 in a display area on the right side. Furthermore, when the operator presses the "MAP" button on the information display screen P2 shown in FIG. 7, the display processing unit 212 causes the selection screen P1 to be displayed with an enlarged display (see FIG. 5), and when the operator presses the "CAMERA" button, causes the information display screen P2 to be displayed with an enlarged display (see FIG. 6A). Note that the display processing unit 212 may cause the front image to be displayed on the lower side of the information display screen P2, and the rear image, the left side image, and the right side image to be displayed on the upper side of the information display screen P2. Also, it may be possible for the arrangement, size, display/non-display of each image to be set (customized) by the operator.

In addition, the operation control unit 21 issues an autonomous travel instruction to the work vehicle 10. For example, when the operator selects a field and presses a start button (not illustrated) when causing the work vehicle 10 to start autonomously traveling, the operation control unit 21 outputs the route data of the target route to the work vehicle 10. When the route data that has been generated in the operation terminal 20 is transferred to the work vehicle 10, the work vehicle 10 stores the route data in the storage unit 12. The work vehicle 10 detects the current position of the work vehicle 10 using the positioning antenna 174, and executes autonomous travel processing based on the route data. Note that the current position of the work vehicle 10 usually coincides with the position of the positioning antenna 174.

Also, the work vehicle 10 is configured to be capable of autonomously traveling when the current position coincides with, or is positioned within a predetermined range of, the travel start position in the field (when an autonomous travel start condition is satisfied). When the work vehicle 10 satisfies the start condition, and is given a travel start instruction as a result of the operator pressing the start button on the operation screen (not illustrated), autonomous travel on the target route is started by the travel processing unit 111 of the work vehicle 10.

Note that the setting processing in the setting processing unit 211 described above, and the processing in the operation control unit 21 that causes autonomous travel to start may be executed by a device that is different from the operation terminal 20. For example, the operator may perform a setting operation of various setting information, an operation that generates the target route, issue an autonomous travel instruction, and the like, using a tablet terminal that is different from the operation terminal 20. In this case, the operation terminal 20 only includes a monitoring function that monitors the work vehicle 10, and the tablet terminal may perform the setting processing of various setting information, the processing that generates the target route, the autonomous travel processing, and the like. In addition, the operation terminal 20 according to the present embodiment may be realized by adding the monitoring function to the tablet terminal. Also, as another embodiment, the operation control unit 21 may cause the selection screen P1 and the information display screen P2 to each be displayed on a different device. For example, the operation control unit 21 may cause the selection screen P1 to be displayed on the operation terminal 20, and cause the information display screen P2 to be displayed on a different device to the operation terminal 20 (such as the tablet terminal, or a mobile terminal of the operator or worker).

Note that the operation terminal 20 may be capable of accessing, through the communication network N1, a website of an agricultural support service (agricultural support site) provided on a server (not illustrated). In this case, the operation control unit 21 executes a browser program, allowing the operation terminal 20 to function as an operation terminal of the server. Further, the server includes the processing units described above, and performs the processing.

### [Display Control Processing]

Hereinafter, an example of display control processing executed by the autonomous travel system 1 will be described with reference to FIG. 8.

Note that the present invention can be regarded as an invention of a display control method (an example of a display control method of the present invention) that executes one or more steps included in the display control processing. Furthermore, one or more steps included in the display control processing described here may be omitted as appropriate. Also, the execution order of the steps of the display control processing may differ, as long as the same operational effects are obtained. Further, although a case where the operation control unit 21 executes each of the steps of the display control processing will be described herein as an example, a display control method in which one or more processors execute the steps of the display control processing in a distributed manner can be considered as another embodiment.

In step S1, the operation control unit 21 determines whether or not the position information of the work vehicles 10 has been acquired. When the operation control unit 21 acquires the position information of the current position from the registered work vehicles 10 representing the monitoring targets (S 1: Yes), the processing shifts to step S2. The operation control unit 21 waits until the position information of each work vehicle 10 is acquired (S1: No).

In step S2, the operation control unit 21 causes the selection screen P1 of the operation display unit 23 to display a map of a predetermined area including the current positions of the work vehicles 10, and causes icon images (vehicle icons) of the work vehicles 10 to be displayed on the map in the positions corresponding to the current positions of the work vehicles 10. For example, when the work vehicle 10a and the work vehicle 10b are registered, as shown in FIG. 3, the operation control unit 21 causes the selection screen P1 to display a map of a predetermined area including the current position of each of the work vehicle 10a and the work vehicle 10b, and causes the icon image A1 of the work vehicle 10a to be displayed on the map in the position corresponding to the current position of the work vehicle 10a, and the icon image B1 of the work vehicle 10b to be displayed in the position corresponding to the current position of the work vehicle 10b.

Next, in step S3, the operation control unit 21 determines the current state of the work vehicles 10. Specifically, the operation control unit 21 determines whether the work vehicles 10 are autonomously traveling, or have stopped autonomously traveling. As another embodiment, the operation control unit 21 may determine whether or not the work vehicles 10 have detected an obstacle, whether or not the work has been completed, whether or not the remaining amount of spray material or fuel has fallen below a specified amount, whether or not the amount of harvested material has become greater than or equal to a specified amount, whether or not regeneration work of the diesel particulate filter (DPF) has become necessary, whether replenishment work of urea water has become necessary, and the like.

Then, in step S4, the operation control unit 21 displays identification information in a display mode that corresponds to the current state of the work vehicles 10. Specifically, the operation control unit 21 identifiably displays icon images on the map indicating whether the work vehicles 10 are autonomously traveling, or have stopped autonomously traveling. For example, as shown in FIG. 4, when the work vehicle 10a has stopped autonomously traveling, and the work vehicle 10b is autonomously traveling, the operation control unit 21 encloses the icon image A1 with a frame image A2 in a first display mode (for example, a red frame image), and encloses the icon image B 1 with a frame image B2 in a second display mode (for example, a blue frame image). Note that the operation control unit 21 may not display a frame image when the work vehicle 10 when autonomous travel is proceeding normally.

As another embodiment, the operation control unit 21 may use a different display mode of the frame image depending on the cause of a stoppage of the work vehicle 10. For example, when the work vehicle 10a has stopped autonomously traveling due to detection of an obstacle, the operation control unit 21 causes the frame image A2 to be displayed illuminated with a red color. In contrast, when the work vehicle 10a has stopped autonomously traveling due to completion of the work, the operation control unit 21 causes the frame image A2 to be displayed flashing with a red color.

Next, in step S5, the operation control unit 21 determines whether or not a selection operation of a work vehicle 10 has been received from the operator on the selection screen P1. Specifically, on the selection screen P1 shown in FIG. 4, the operation control unit 21 receives an operation from the operator that selects the icon image of a work vehicle 10. For example, as shown in FIG. 5, when the operator touches the icon image A1 displayed on the selection screen P1 using a finger, the operation control unit 21 receives the touch operation. When the operation control unit 21 receives the selection operation of the work vehicle 10 from the operator (S5: Yes), the processing proceeds to step S6. On the other hand, when the operation control unit 21 has not received a selection operation of a work vehicle 10 from the operator (S5: No), the processing proceeds to step S7.

Then, in step S6, the operation control unit 21 causes the operation display unit 23 to display predetermined information related to the work vehicle 10 that has been selected by the operator. Specifically, the operation control unit 21 causes the information display screen P2 to display information related to a current surrounding environment of the work vehicle 10, information related to a current travel status of the work vehicle 10, information related to a current work status of the work vehicle 10, and the like. For example, when the operator selects the icon image A1 of the work vehicle 10a (see FIG. 5), as shown in FIG. 6A, the operation control unit 21 causes the information display screen P2 to display capture images (a front image, a rear image, a left side image, and a right side image) of the surroundings of the work vehicle 10a that have been captured by the camera 53 installed on the work vehicle 10a.

The operation control unit 21 may cause the information display screen P2 to be displayed as a different page (see FIG. 6A) to the selection screen P1 (see FIG. 5), or may cause the information display screen P2 and the selection screen P1 to be displayed as a two-screen display on the same page (see FIG. 7).

Furthermore, the operation control unit 21 receives, on the information display screen P2, an operation from the operator that switches the capture image (the front image, the rear image, the left side image, and the right side image) (see FIGS. 6A to 6C), an operation that starts, restarts or stops autonomous travel, an operation that switches to the selection screen P1, and the like, and switches the display screen according to the operation.

In step S7, the operation control unit 21 determines whether or not a termination operation has been received from the operator. For example, when the operator performs a termination operation (for example, a logoff operation) to end the monitoring of the work vehicles 10, the operation control unit 21 receives the termination operation (S7: Yes), and ends the display control processing. When the operation control unit 21 has not received a termination operation from the operator (S7: No), the processing returns to step S1, and the processing described above is executed.

The operation control unit 21 repeatedly executes the processing of steps S1 to S6 until a termination operation is received from the operator. Furthermore, while the operation control unit 21 has not received a selection operation of a work vehicle 10 from the operator on the selection screen P1 (S5: No), the positions of the icon images are updated in real time on the selection screen P1 according to the current positions of the work vehicles 10. The operation control unit 21 executes the display control processing as described above.

As described above, the operation terminal 20 according to the present embodiment controls the display information of the operation terminal 20. Specifically, the operation terminal 20 causes the selection screen P1 (first screen) of the operation terminal 20 to display preregistered work vehicles 10 so as to be selectable by a user, and causes an information display screen P2 (second screen) of the operation terminal 20 to display predetermined information related to the work vehicle 10 that has been selected by the user. For example, the operation terminal 20 causes the information display screen P2 to display at least one of information related to a current surrounding environment of the work vehicle 10, information related to a current travel status of the work vehicle 10, and information related to a current work status of the work vehicle 10.

According to the configuration described above, the operator is capable of grasping the registered work vehicles 10 on the selection screen P1. Furthermore, the operator is capable of confirming information related to the work vehicle 10 that has been selected on the selection screen P1. As a result, the operator is capable of remotely monitoring the work vehicles 10. Therefore, it is possible to improve the convenience of the operation terminal 20 that displays information related to the work vehicles 10 capable of autonomous travel.

In addition, the operation terminal 20 may cause the information display screen P2 to display not only information related to the current travel status of the work vehicles 10 (such as the vehicle speed and the engine rotation speed), but also an operation portion in which setting operations are possible. For example, the operation terminal 20 may display the operation portion with the camera images on the information display screen P2, or may display the operation portion on another screen (a settings screen dedicated to the operation portion) after switching from the camera images. Also, in the configuration in which the operation portion and the camera images are displayed together, the operator may be capable of setting an operation portion that displays only a vehicle speed operation portion, only an engine rotation speed operation portion, and the like. According to the configuration in which the operator is capable of setting the operation portion, for example, it is possible to prevent a reduction in the operability and visibility accompanying an increase in the number of operation portions when the operation terminal 20 is realized by a mobile terminal (such as a smartphone).

Furthermore, the operation terminal 20 may cause the information display screen P2 to display the type of work (the type of work machine 14) and information about the target height of the work machine 14 from the ground, as well as an operation unit that sets the target height from the ground. For example, the operation terminal 20 may display the operation portion with the camera images on the information display screen P2, or may display the operation portion on another screen (a settings screen dedicated to the operation portion) after switching from the camera images. In addition, in the configuration in which the operation portion and the camera images are displayed together, the operator may be capable of setting an operation portion that includes a display of a travel status operation portion. According to the configuration in which the operator is capable of setting the operation portion, for example, it is possible to prevent a reduction in the operability and visibility accompanying an increase in the number of operation portions when the operation terminal 20 is realized by a mobile terminal (such as a smartphone).

### [Other Embodiments]

The present invention is not limited to the embodiment described above, and may be the following embodiments.

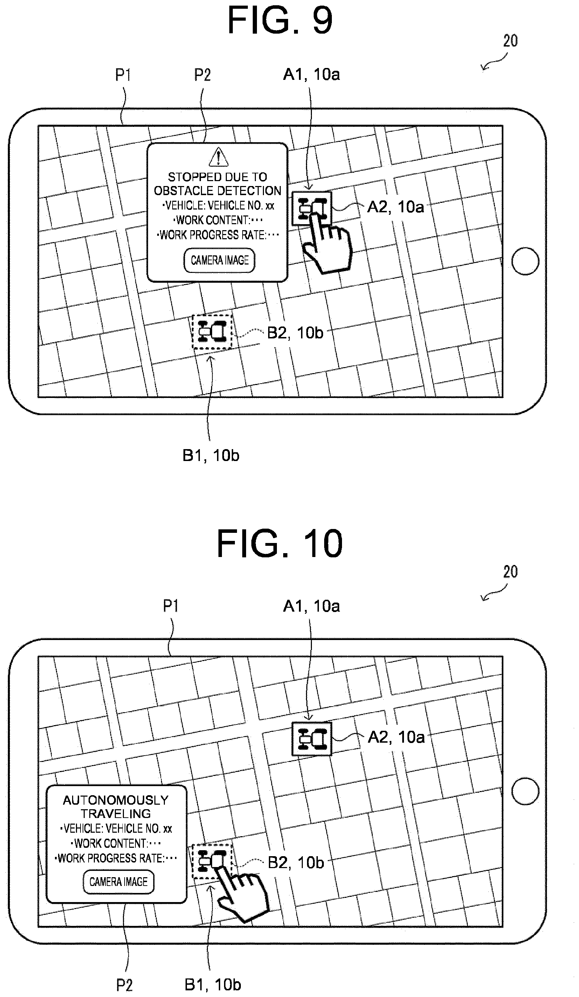

For example, when the operator selects a work vehicle 10 on the selection screen P1, the operation control unit 21 may display information related to the selected work vehicle 10 inside the selection screen P1. For example, as shown in FIG. 9, when the operator selects the icon image A1 of the work vehicle 10a on the selection screen P1, the operation control unit 21 causes the information display screen P2, which includes the current state of the work vehicle 10a, such as autonomous travel being stopped due to detection of an obstacle, the name of the work vehicle 10a, the work content, and the progress status of the work, and the like, to be displayed near the icon image A1 (as a pop-up display). For example, the operation control unit 21 may be configured such that the progress status can be confirmed by causing a screen to be displayed that includes the route that is set on the information display screen P2 and the icon image (vehicle icon) on the route). In addition, the operation control unit 21 may cause a screen to be displayed that includes the camera images, the route that has been set, and the icon image on the route, or may cause a screen to be displayed, after switching from the camera images, that includes the route that has been set and the icon image on the route.

Furthermore, for example, as shown in FIG. 10, when the operator selects the icon image B1 of the work vehicle 10b on the selection screen P1, the operation control unit 21 causes the information display screen P2, which includes the current state of the work vehicle 10b, such as performing autonomous travel, the name of the work vehicle 10b, the work content, and the progress status of the work, and the like, to be displayed near the icon image B1 (as a pop-up display).

Moreover, as shown in FIGS. 9 and 10, the operation control unit 21 may display a "CAMERA IMAGE" button on the information display screen P2. The operation control unit 21 switches to the information display screen P2 that displays the capture images of the camera 53 (see FIG. 6A) when the operator presses the "CAMERA IMAGE" button.

In addition, when the operator presses an icon image of a work vehicle 10 on the selection screen P1 a single time for a short time (short press), the operation control unit 21 may cause the selection screen P1 to display the information display screen P2 as a pop-up display (see FIGS. 9 and 10), and when the operator presses an icon image of a work vehicle 10 on the selection screen P1 a single time for a long time (long press), the operation control unit 21 may switch from the selection screen P1 to the information display screen P2 (see FIG. 6A).

In the embodiment described above, when the operator selects a work vehicle 10 on the selection screen P1 (see FIG. 5), the operation control unit 21 causes predetermined information related to the selected work vehicle 10 to be displayed on the information display screen P2. As another embodiment, when a registered work vehicle 10 shifts to a predetermined state, the operation control unit 21 may cause predetermined information related to the work vehicle 10 to be displayed on the information display screen P2. Specifically, when a work vehicle 10 that is autonomously traveling detects an obstacle, or when a work vehicle 10 autonomously travels in a specific area, the operation control unit 21 causes predetermined information related to the work vehicle 10 to be displayed on the information display screen P2. The specific area is, for example, an inter-field route on a road.

For example, when the work vehicle 10a autonomously travels on an inter-field route, the operator needs to monitor the travel status. Therefore, when the work vehicle 10a starts to autonomously travel on an inter-field route, the operation control unit 21 automatically switches the selection screen P1 to the information display screen P2 (see FIG. 6A) even when an operation in which the operator selects the work vehicle 10a has not been received on the selection screen P1.

Furthermore, when a work vehicle 10 has detected an obstacle and has stopped, it is necessary to promptly notify the operator. Therefore, when the work vehicle 10a has detected an obstacle in the stopping control range, the operation control unit 21 automatically switches the selection screen P1 to the information display screen P2 even when an operation in which the operator selects the work vehicle 10a has not been received on the selection screen P1. Note that, in such a configuration, when the work vehicle 10a detects an obstacle in the notification control range or the deceleration control range, the operation control unit 21 may switch to the information display screen P2 on the condition that the operator has selected the work vehicle 10a on the selection screen P1.

Note that, in the configuration in which predetermined information related to the work vehicle 10 is automatically displayed on the information display screen P2 is not limited to a case where a work vehicle 10 that is autonomously traveling has detected an obstacle, or a case where a work vehicle 10 autonomously travels in a specific area. For example, the operation control unit 21 may cause predetermined information about a work vehicle 10 to automatically be displayed on the information display screen P2 when specific work such as refilling a spray material or fuel, discharge of harvested material, regeneration of the DPF, or refilling urea water, has become necessary.

Furthermore, the vehicle control device 11 may allow autonomous travel of a work vehicle 10 on an inter-field route when a predetermined condition is satisfied. For example, the vehicle control device 11 may allow autonomous travel on an inter-field route only while the operator is directing the line of sight toward the camera images on the information display screen P2. In addition, for example, the vehicle control device 11 may allow autonomous travel on an inter-field route on the condition that the amount of battery remaining in the operation terminal 20 is a predetermined amount or more before starting autonomous travel on the inter-field route.

As a result, it is possible to prevent a situation in which the power to the operation terminal 20 is turned off while the work vehicle 10 autonomously traveling on the inter-field route, preventing the operator from being able to remotely monitor the work vehicle 10.

Moreover, for example, the vehicle control device 11 may allow autonomous travel on an inter-field route on the condition that a plurality of operation terminals 20 are connected. As a result, it is possible to prevent a situation in which the power to a single operation terminal 20 is turned off or a communication abnormality occurs while the work vehicle 10 autonomously traveling on the inter-field route, preventing the operator from being able to remotely monitor the work vehicle 10. Note that, although the vehicle control device 11 allows autonomous travel on an inter-field route when a single operation terminal 20 is connected, the vehicle control device 11 may prompt another operation terminal 20 to be connected when the connection to the operation terminal 20 is interrupted. In this case, the vehicle control device 11 stops autonomous travel on the inter-field route until another operation terminal 20 is connected.

In addition, the vehicle control device 11 may stop autonomously traveling on an inter-field route when communication with the operation terminal 20 is disconnected, and when startup of an application that causes the selection screen P1 and the information display screen P2 to be displayed on the operation terminal 20 is stopped, or is in a background state. Also, the vehicle control device 11 may cause the work vehicle 10 to automatically approach the shoulder of the road when autonomous travel on an inter-field route is stopped.

Here, for example, when the work vehicle 10 autonomously travels on an inter-field route set to a road (for example, a farm road), in order to ensure the safety, a mode of operation in which the images of the surroundings of the work vehicle 10 are constantly displayed on the operation terminal 20 may be adopted. In this case, for example, when the work vehicle 10a autonomously travels on an inter-field route, it is preferable that the operation control unit 21 causes the information display screen P2 of the operation terminal 20 to constantly display the capture images of the camera 53 of the work vehicle 10a (see FIG. 6A). However, when such a configuration is adopted, for example, when another work vehicle 10 (for example, the work vehicle 10b) detects an obstacle and stops while the work vehicle 10a is autonomously traveling on an inter-field route, because information related to the work vehicle 10b is not displayed on the operation terminal 20, a problem can occur in which the operator is unable to grasp that the work vehicle 10b is in the stopped state.

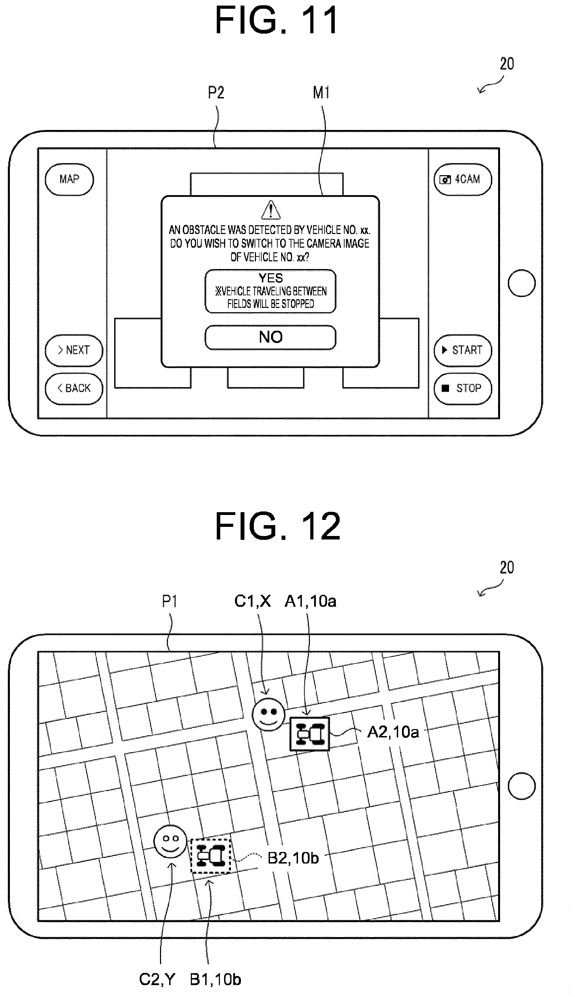

Therefore, as shown in FIG. 11, the operation control unit 21 causes the information display screen P2, which is displaying the capture images corresponding to the work vehicle 10a during autonomous travel on the inter-field route, to display (as a pop-up display) information (a message M1) that indicates the work vehicle 10b has detected an obstacle and has stopped. Furthermore, the operation control unit 21 causes a selection button for selecting whether or not to switch to the information display screen P2 that displays information about the work vehicle 10b to be displayed in the message M1, and receives a selection operation from the operator. When the operator presses the "YES" button of the message M1, the operation control unit 21 switches to the information display screen P2 that displays information related to the work vehicle 10b. In this case, because the capture images related to the work vehicle 10a, which is currently autonomously traveling on the inter-field route, is no longer displayed, the operation control unit 21 outputs an autonomous travel stop instruction to the work vehicle 10a. When the work vehicle 10a acquires the stop instruction, the work vehicle 10a may immediately temporarily stop, or may travel to a predetermined location (such as the shoulder of the road, or a standby location) and then temporarily stop. In addition, the operator may move the work vehicle 10a to the predetermined location by remote operation using the operation terminal 20.

In this way, the operation control unit 21 causes the predetermined work vehicles 10 to be displayed on the selection screen P1 (first screen) of the operation terminal 20, and when a work vehicle 10 that is autonomously traveling detects an obstacle, or when a work vehicle 10 autonomously travels in a specific area, the operation control unit 21 may cause predetermined information related to the work vehicle 10 to be displayed on the information display screen P2 (second screen) of the operation terminal 20.

As another embodiment of the present invention, the operation control unit 21 may cause identification information of a preregistered worker of the work vehicle 10 to be displayed on the selection screen P1 in association with identification information of the work vehicle 10. For example, when a worker X that manages and supports the work performed by the work vehicle 10a, and a worker Y that manages and supports the work performed by the work vehicle 10b are registered, as shown in FIG. 12, the operation control unit 21 causes an icon image C1 of the worker X to be displayed on the map of the selection screen P1 in association with the icon image A1 of the work vehicle 10a, and causes an icon image C2 of the worker Y to be displayed in association with the icon image B1 of the work vehicle 10b. The operation control unit 21 may display the icon image C1 and the icon image C2 in different display modes to each other.

As a result, the operator monitoring the work vehicles 10 can easily grasp that a worker is registered to each work vehicle 10. Note that the operation control unit 21 may acquire the position information of the workers, and display the icon images of the workers at the current positions of the workers. For example, the operation control unit 21 may acquire the current positions of the worker X and the worker Y based on the position information of the operation terminals 20 that are being carried by the worker X and the worker Y, or the current position of the worker X may be acquired based on position information of a remote control for close-range operation of the work vehicle 10a, and the current position of the worker Y may be acquired based on position information of a remote control for close-range operation of the work vehicle 10b. In addition, the operation control unit 21 may have a configuration in which the positions of the remote controls are displayed instead of a configuration in which the positions of the workers are displayed.

Note that, when a worker (such as the worker X or Y) that is different from the operator that is remotely monitoring the work vehicles 10 has started an application that causes the selection screen P1 and the information display screen P2 to be displayed on the worker's own operation terminal 20, which is different from the operator's operation terminal 20, the worker may be capable of making a request to the operator to transfer the permissions of the operator to worker's own operation terminal 20.

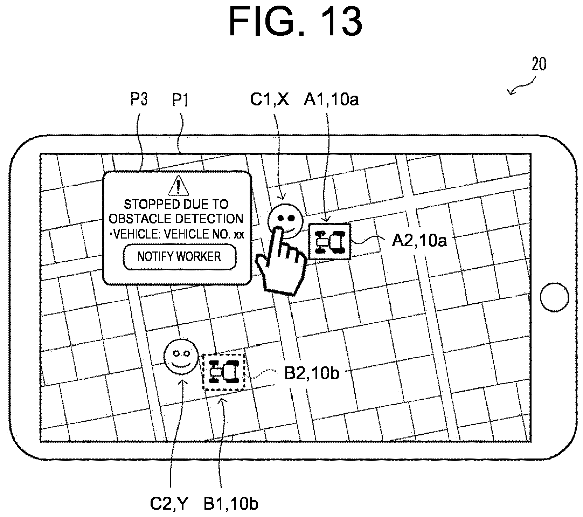

Furthermore, on the selection screen P1 shown in FIG. 12, the operation control unit 21 may receive an operation that selects the icon image of a worker. For example, when the operator selects the icon image C1 of the worker X on the selection screen P1, as shown in FIG. 13, the operation control unit 21 causes an instruction screen P3 for outputting a predetermined instruction to the worker X to be displayed. For example, when the operator presses the "NOTIFY WORKER" button on the instruction screen P3, the operation control unit 21 notifies the mobile terminal that is being carried by the worker X with an obstacle confirmation instruction, an instruction to remove the obstacle, or the like. As another embodiment, when the operator selects the icon image C1 of the worker X on the selection screen P1, the operation control unit 21 may start an application that transmits and receives messages with respect to the mobile terminal of the worker X, and notify the mobile terminal of the worker X with a message.

In addition, as another embodiment, when the worker boards the work vehicle 10 and manually travels between fields, or the worker boards the work vehicle 10 and autonomously travels based on an inter-field route, or when the work for the day is completed and the work vehicle 10 is to be put away at a storage location, and the worker boards the work vehicle 10 to manually travel to the storage location, or the worker boards the work vehicle 10 to autonomously travel on a travel route to the storage location, based on the arrival time of the work vehicle 10 at the work end position and the position of the operator or the worker, the operation terminal 20 may be notified at a timing when the operator or the worker can arrive at the work end position so as to match the arrival time of the work vehicle 10 at the work end position.

Furthermore, as another embodiment, the operation control unit 21 may cause a list of workers that are near the work vehicle 10a to be displayed, and a predetermined instruction may be output to a worker that the operator has selected from the list. Moreover, as another embodiment, the workers may be registered with respect to the work vehicles 10, or may be registered with respect to a work plan for the day.

In the embodiment described above, the operation control unit 21 causes the preregistered work vehicles 10 to be selectably displayed on the map on the selection screen P1 (see FIGS. 3 and 4). As another embodiment, the operation control unit 21 may cause a list of preregistered work vehicles 10 (registered vehicle list) to be displayed on the selection screen P1. In addition, the operation control unit 21 may be provided with a filter function for determining the work vehicles 10 that are displayed on the map or in the list. For example, the items of the filter function include items such as vehicles displayed on the map (within a predetermined scale), vehicles in operation, vehicles moving between fields, vehicles that have stopped, vehicles experiencing problems, unmonitored vehicles that are not participating in the current work, vehicles that have stopped outside the field due to a problem or detection of an obstacle, and vehicles that immediately or will soon require refilling of work machine materials (chemicals, fertilizer, seedlings, and the like). The operation control unit 21 is capable of causing the vehicles corresponding to the set item to be displayed on the map or in the list, or causing the vehicles other than those that correspond to the set item to be displayed on the map or in the list.

Also, as another embodiment, the operation control unit 21 may selectably display the work vehicles 10 on the map, and also display the work vehicles 10 in a selectable list on the same page as the selection screen P1. In addition, as another embodiment, the operation control unit 21 may selectably display the work vehicles 10 on the map, and also display the work vehicles 10 in a selectable list on the same page as the selection screen P1, and when a work vehicle 10 in the list is selected, display the position of the selected work vehicle 10 on the map.

Furthermore, the operation control unit 21 may cause identification information to be displayed in the list in a display mode corresponding to the current state of the work vehicles 10. For example, when the work vehicle 10a has stopped autonomously traveling, the operation control unit 21 may cause the name of the work vehicle 10a to be displayed in the list with an emphasized display.

As described above, in the above embodiment, the operation terminal 20 corresponds to the display control system according to the present invention. However, the display control system according to the present invention may be configured by the operation terminal 20 alone, or may be configured by including the work vehicle 10 and the operation terminal 20. For example, the display control system according to the present invention may be the autonomous travel system 1.

### [Remote Operation System]

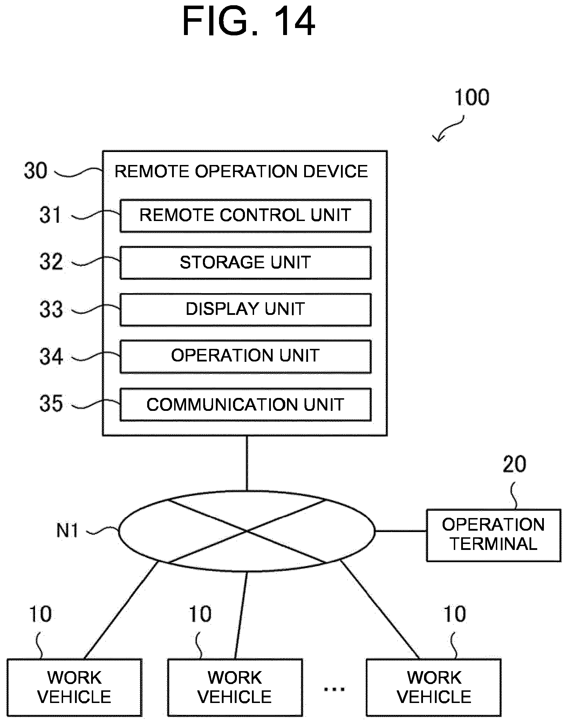

The autonomous travel system 1 may construct a remote operation system 100. As shown in FIG. 14, the remote operation system 100 includes work vehicles 10, an operation terminal 20, and a remote operation device 30. The number of work vehicles 10, operation terminals 20, and remote operation devices 30 may each be one or more. In the present embodiment, an example will be described in which the remote operation system 100 includes a plurality of work vehicles 10, a single operation terminal 20, and a single remote operation device 30.

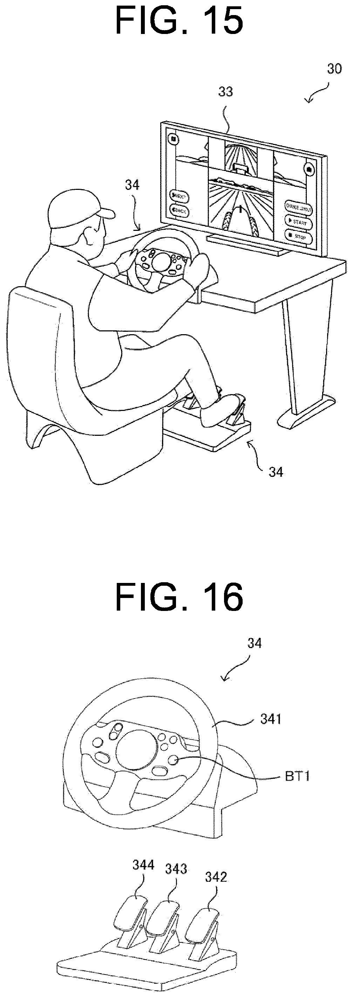

The remote operation system 100 is a system that causes a work vehicle 10 to travel as a result of the user (an operator or a monitoring person) operating (remotely operating) the remote operation device 30 from a remote location that is away from the field in which the work vehicle 10 is performing work. FIG. 15 schematically shows the remote operation device 30 installed at a remote location (for example, a monitoring room), and remote operation being performed. In the monitoring room, the operator is capable of remotely driving the work vehicle 10 subjected to remote operation while viewing the capture images that are captured by the camera 53 of the work vehicle 10.

As shown in FIG. 14, the remote operation device 30 is an information processing device including an operation control unit 31, a storage unit 32, a display unit 33, an operation unit 34, a communication unit 35, and the like. For example, the remote operation device 30 may be a stationary (desktop) personal computer.

The communication unit 35 connects the remote operation device 30 to the communication network N1 in a wired or wireless fashion, and is a communication interface for executing data communication according to a predetermined communication protocol with an external device, such as the work vehicle 10 and the operation terminal 20, via the communication network N1.

The display unit 33 is a monitor, such as a liquid crystal display or an organic EL display, that displays various information. Note that the display unit 33 may be configured by a touch panel that receives touch operations.

The operation unit 34 receives various operations from the user. Specifically, as shown in FIG. 16, the operation unit 34 includes a steering wheel 341 for steering the work vehicle 10, an accelerator pedal 342 that causes the vehicle speed of the work vehicle 10 to increase, a brake pedal 343 that causes the work vehicle 10 to decelerate and stop, and a neutral pedal 344 that switches the gear position to a neutral position. Furthermore, a plurality of operation buttons (for example, a mode switching button BT1) are arranged on the steering wheel 341. As another embodiment, the plurality of operation buttons may be provided on a separate device to the steering wheel 341. For example, an operation device (not illustrated) on which the plurality of operation buttons are provided may be arranged in the monitoring room. The operation device is included in the operation unit 34.

The storage unit 32 is a non-volatile storage unit, such as an HDD or an SSD, that stores various types of information. The storage unit 32 stores a control program for causing the operation control unit 31 to execute various processing. For example, the control program is non-transiently recorded in a computer-readable recording medium such as a CD or a DVD, is read by a predetermined reading device (not illustrated), and then stored in the storage unit 32. Note that the control program may be downloaded from a server (not illustrated) to the remote operation device 30 via the communication network N1, and then stored in the storage unit 32.

The operation control unit 31 includes control devices such as a CPU, a ROM, and a RAM. The CPU is a processor that executes various types of arithmetic processing. The ROM is a non-volatile storage unit that stores, in advance, control programs such as a BIOS and an OS for causing the CPU to execute the various types of the arithmetic processing. The RAM is a volatile or non-volatile storage unit that stores various types of information, and is used as a temporary storage memory (work area) for various types of processing executed by the CPU. Further, the operation control unit 31 controls the remote operation device 30 as a result of the CPU executing various control programs stored in advance in the ROM or the storage unit 32.

Specifically, the operation control unit 31 executes processing in which the operator switches to a remote operation mode that allows remote operation of a work vehicle 10 using the remote operation device 30. For example, when the operator presses a mode switching button BT1 (see FIG. 16) arranged on the steering wheel 341 when the camera images of a work vehicle 10 that can be remotely operated are displayed on the display unit 33, the operation control unit 31 switches the travel mode of the work vehicle 10 from an autonomous travel mode, which allows autonomous travel without depending on operations by the operator, to the remote operation mode. In this way, operation control unit 31 allows switching to the remote operation mode on the condition that the capture images of the camera 53 installed on the work vehicle 10, which is the remote operation target, are displayed on the display unit 33, and the operator is capable of confirming the status of the surroundings of the work vehicle 10.

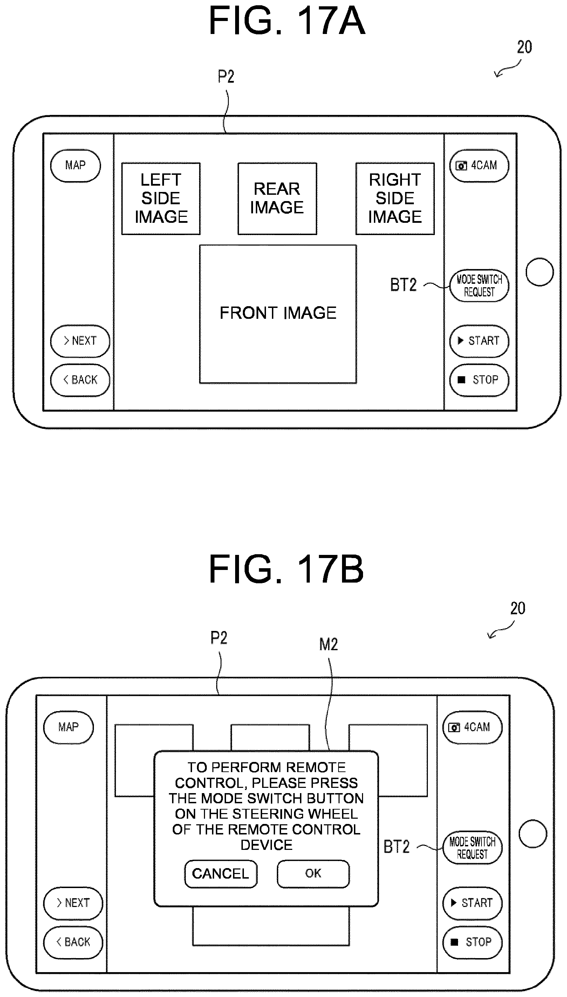

Furthermore, the operation control unit 31 may cause the display unit 33 to display the camera images according to an instruction from the operation terminal 20. For example, the operator selects the work vehicle 10 subjected to remote operation on the selection screen P1 (see FIG. 3) that is displayed on the operation terminal 20. When the operator selects the work vehicle 10, as shown in FIG. 17A, the operation terminal 20 displays the information display screen P2, and causes the camera images of the work vehicle 10, and a request button BT2 ("mode switching request" button) for requesting the travel mode to be switched to the remote operation mode on the information display screen P2. When the operator presses the request button BT2, as shown in FIG. 17B, the operation terminal 20 causes a message M2 to be displayed (as a pop-up display) on the information display screen P2 that prompts the mode switching button BT1 (see FIG. 16) on the steering wheel 341 of the remote operation device 30 to be pressed. When the operator presses the OK button of the message M2, the operation terminal 20 outputs mode switching information to the remote operation device 30. The mode switching information includes identification information of the work vehicle 10 subjected to remote operation that has been selected by the operator, and the like.

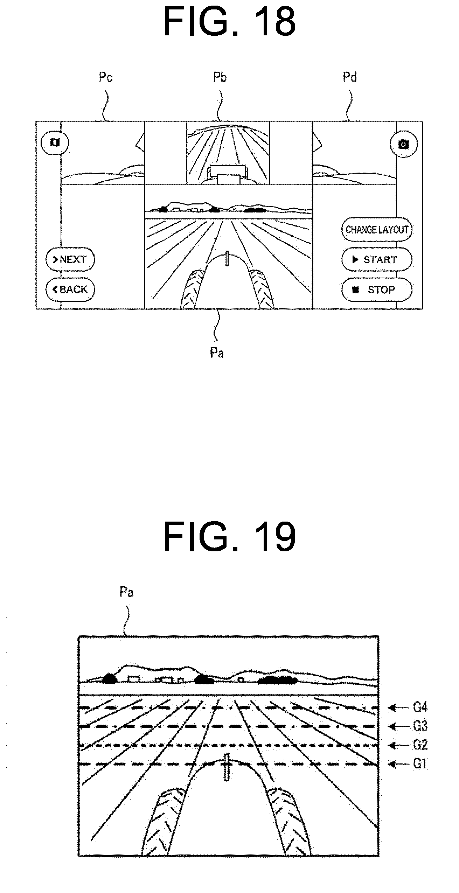

When the operation control unit 31 of the remote operation device 30 receives the mode switching information from the operation terminal 20, as shown in FIG. 18, the operation control unit 31 causes the display unit 33 to display the camera images of the work vehicle 10 subjected to remote operation. Specifically, the operation control unit 31 displays a front image Pa, a rear image Pb, a left side image Pc, and a right side image Pd of the work vehicle 10. Note that the camera images displayed on the remote operation device 30 may be the same as the camera images displayed on the operation terminal 20. The operation control unit 31 allows switching to the remote operation mode after causing the camera images of the work vehicle 10 to be displayed on the display unit 33. As a result, for example, when the operator presses the mode switching button BT1 (see FIG. 16) on the steering wheel 341, the operation control unit 31 receives the operation, and switches the travel mode from the autonomous travel mode to the remote operation mode. Note that, when switching to the remote operation mode, the travel processing unit 111 of the work vehicle 10 may temporarily stop the work vehicle 10.

When the travel mode is switched to the remote operation mode, the operation control unit 31 accepts the driving operations of the operator, and outputs travel instructions corresponding to the operations to the work vehicle 10. The travel processing unit 111 of the work vehicle 10 causes the work vehicle 10 to travel according to the travel instructions. For example, when the operator turns the steering wheel 341 to the right, the travel processing unit 111 steers the work vehicle 10 to the right. When the operator turns the steering wheel 341 to the left, the travel processing unit 111 steers the work vehicle 10 to the left. Furthermore, when the operator depresses the accelerator pedal 342, the travel processing unit 111 causes the work vehicle 10 to accelerate. When the operator depresses the brake pedal 343, the travel processing unit 111 causes the work vehicle 10 to decelerate. In this way, the operator is capable of remotely operating (remotely driving) the work vehicle 10 from a remote location. Moreover, for example, even when work vehicles 10 have recognized each other as obstacles and have stopped, the operator is capable of performing evacuation travel of the work vehicles 10 by remote operation. In addition, the operator is capable of performing remote operation by switching the travel mode to the remote operation mode from a remote location, even while remotely monitoring the work vehicles 10.

Also, in the remote operation mode, when the operator depresses the accelerator pedal 342, the travel processing unit 111 causes the vehicle speed to increase according to the depressing amount. Note that the travel processing unit 111 causes the speed to change according to the depressing amount within a set vehicle speed (maximum vehicle speed) range that is set to the work vehicle 10. For example, when the maximum vehicle speed when working inside a field is set to 10 km, and the operator depresses the accelerator pedal 342 by the maximum amount, the travel processing unit 111 increases the vehicle speed to 10 km. Further, when the maximum vehicle speed when moving between fields is set to 30 km, and the operator depresses the accelerator pedal 342 by the maximum amount, the travel processing unit 111 increases the vehicle speed to 30 km. In this way, although there is a difference in the setting of the maximum vehicle speed when traveling in a field and when traveling outside a field, because the vehicle speed is controlled by the accelerator opening level (depressing amount) with respect to the maximum vehicle speed, it becomes easier for the operator to perform driving operations.

Furthermore, while the remote operation mode is set, the operation control unit 31 may cause the display unit 33 to display vehicle information such as the status of the work vehicle 10, the engine rotation speed, and the vehicle speed. In addition, while the remote operation mode is set, the operation control unit 31 may output travel sounds of the work vehicle 10 from the remote operation device 30. For example, the operation control unit 31 may acquire sounds collected by a microphone installed on the work vehicle 10, and output the sounds from a speaker installed on the remote operation device 30 or in the monitoring room. Although it is generally difficult to grasp the sense of speed or the work load state without sound, according to the configuration described above, it is possible for the operator to perform remote driving with a feeling close to that of actual driving by playing the work sounds.

Moreover, in the remote operation mode, the operation control unit 31 may output motion instructions to the work vehicle 10 corresponding to operations performed with respect to the operation buttons (see FIG. 16) arranged on the steering wheel 341. For example, the operation buttons include a button that switches the travel direction of the work vehicle 10, buttons that raise and lower the work machine 14 (a raising button and a lowering button), a button that temporarily stops the work vehicle 10, and the like. For example, when the operator presses the lowering button, the vehicle control device 11 acquires the motion instruction from the remote operation device 30, and lowers the work machine 14.

The operation control unit 31 may be capable of setting the function assigned to each operation button. For example, the operation control unit 31 causes the display unit 33 to display a function settings screen (not illustrated), and receives an operation from the operator that selects the function to be assigned to each operation button. The operation control unit 31 assigns the function to each operation button according to selection operations performed by the operator.

Here, when the camera images are displayed on the display unit 33, the operation control unit 31 may cause the images to be displayed such that a portion of the vehicle body appears in each image. For example, the operation control unit 31 displays the front image Pa such that a portion of the hood of the work vehicle 10 and a portion of the left and right wheels appear, displays the rear image Pb such that part or all of the work machine 14 and the work tracks appear, displays the left side image Pc such that a portion of the left side of the vehicle body of the work vehicle 10 and a portion of the left side mirror appear, and displays the right side image Pd such that a portion of the right side of the vehicle body of the work vehicle 10 and a portion of the right side mirror appear. As a result, it becomes easier for the operator to grasp the distance from the vehicle body of the work vehicle 10 to a target object (an obstacle, a boundary of a field outline, and the like), and to confirm the turning direction. Furthermore, it becomes easier for the operator to align the work vehicle 10 during work. Also, it becomes easier for the operator to confirm the work status (such as whether or not there is residual tillage).

Furthermore, the operation control unit 31 may be capable of switching the rear image Pb between a normal image and a virtual image (mirror image). For example, the operation control unit 31 displays a normal rear image or a virtual rear image in response to a setting operation by the operator. In addition, the operation control unit 31 may display a virtual rear image when the work vehicle 10 has lowered the work machine 14 and is working, and may display a normal rear image when the work vehicle 10 has raised the work machine 14 and has stopped working.

In addition, the operation control unit 31 may move the capture range of the front image according to steering operations of the steering wheel 341. For example, when the operator turns the steering wheel 341 to the left, the operation control unit 31 displays a range on the front left side as the front image Pa according to the amount of movement of the steering wheel 341. Note that the vehicle control device 11 may move (rotate) the camera 53 according to the amount of movement of the steering wheel 341 to change the capture area. Furthermore, the operation control unit 31 may change the magnification (zoom) of the camera image in response to an operation of an operation button by the operator.

Moreover, the operation control unit 31 may display a synthesized image of the front image Pa and the side images (the left side image Pc and the right side image Pd). For example, when the operator turns the steering wheel 341 to the right, the operation control unit 31 synthesizes the front image Pa that captures a range on the front right and the right side image Pd, and displays the image. Further, when the operator turns the steering wheel 341 to the left, the operation control unit 31 synthesizes the front image Pa that captures a range on the front left and the left side image Pc, and displays the image. As a result, for example, because the operator is capable of confirming the images in the turning direction, the operator is capable of performing remote operation with the same sensation as driving an actual vehicle. In addition, it is possible to confirm images of the front diagonal direction toward which the steering wheel 341 has been turned without adding a camera.

Also, the operation control unit 31 may display information in the camera images, such as a boundary line of the field outline, route information, and a boundary line of the uncultivated land. For example, the operation control unit 31 may synthesize and display an object image corresponding to each piece of information in the camera images. As a result, the operator is capable of easily grasping the travel position when performing work.

Furthermore, as shown in FIG. 19, the operation control unit 31 may synthesize and display grid lines G1 to G4 (marker lines) on the front image Pa that correspond to the distance from the front end of the work vehicle 10. For example, the grid line G1 is displayed at the position of the front end of the work vehicle 10 (0 m). The grid line G2 is displayed at a position 1 m from the front end of the work vehicle 10. The grid line G3 is displayed at a position 2 m from the front end of the work vehicle 10. The grid line G4 is displayed at a position 3 m from the front end of the work vehicle 10. As a result, the operator is capable of accurately grasping the distance to a target object, such as the boundary of the field outline, or an obstacle. Note that the operation control unit 31 may always display the grid lines G1 to G4, or may display the grid lines G1 to G4 at a point the distance to a target object falls below a threshold (for example, less than 5 m). Also, the operation control unit 31 may set the spacing between the grid lines G1 to G4 to be wider as the vehicle speed of the work vehicle 10 increases, and may set the spacing between the grid lines G1 to G4 to be narrower as the vehicle speed of the work vehicle 10 decreases.

Furthermore, for example, when the work vehicle 10 is being remotely operated in the remote operation mode, the operation terminal 20 may identifiably display on the selection screen P1 that the work vehicle 10 is being remotely operated. For example, the operation terminal 20 may display an icon image of the work vehicle 10 being remotely operated in a predetermined color, or may display a pop-up display of information (such as text information, or a symbol) in the icon image indicating that the work vehicle 10 is being remotely operated.

In the embodiment described above, the remote operation device 30 is configured to be capable of remote operation of the work vehicle 10 among the plurality of work vehicles 10 that has been selected by the operator. However, as another embodiment, the remote operation device 30 may be installed so as to correspond to a single, specific work vehicle 10. In this case, the operation of the operator selecting a work vehicle 10 in the operation terminal 20 may be omitted.

Moreover, as another embodiment of the remote operation system 100, the operation in which the operator requests switching of the travel mode to the remote operation mode in the operation terminal 20 (see FIGS. 17A and 17B) may be omitted. In this case, for example, the operator may be capable of switching to the remote operation mode by pressing the mode switching button BT1 (see FIG. 16) in a state where the camera images of the work vehicle 10 are being displayed on the remote operation device 30.

In addition, as another embodiment of the remote operation system 100, the remote operation device 30 may allow switching to the remote operation mode on the condition that the work vehicle 10 has detected an obstacle and has stopped.

In addition, as another embodiment of the remote operation system 100, the remote operation device 30 may cancel the remote operation mode and stop the work vehicle 10 when the camera images of the work vehicle 10 being remotely operated are no longer displayed on the display unit 33. As a result, it is possible to prevent the work vehicle 10 from being remotely operated in a state where the work vehicle cannot be remotely monitored by the operator.

Note that, in the remote operation system 100, the remote operation device 30 may be the operation terminal 20. Furthermore, the display unit 33 of the remote operation device 30 may be the operation terminal 20. The remote operation device 30 is an example of an operation terminal of the present invention.

As another embodiment of the present invention, the display processing unit 212 may identifiably display each work vehicle 10 on the selection screen P1 (see FIG. 3). Specifically, the display processing unit 212 causes the icon image A1 of the work vehicle 10a to be displayed in a first display mode, and the icon image B1 of the work vehicle 10b to be displayed in a second display mode. For example, the display processing unit 212 causes the icon image A1 to be displayed in light blue, and the icon image B1 to be displayed in red. Furthermore, for example, the display processing unit 212 causes the icon image A1 to be displayed using an illustration image of a vehicle, and the icon image B 1 to be displayed using a capture image (photograph) of the vehicle. In addition, for example, the display processing unit 212 causes identification information of the work vehicle 10 (such as the vehicle name, the model, and the serial number) to be displayed (as a balloon display) with respect to the icon image A1 and the icon image B1. Note that it may be possible for the operator to set and change the display mode of each icon image.

### [Supplementary Notes of Invention]

Hereinafter, a summary of the invention extracted from the embodiment will be described as supplementary notes. Note that each of the configurations and processing functions described in the following supplementary notes may be selected and arbitrarily combined.

### <Supplementary Note 1>

A display control method that controls display information of an operation terminal, the display control method comprising:
causing a first screen of the operation terminal to display a preregistered work vehicle so as to be selectable by a user; and
causing a second screen of the operation terminal to display predetermined information related to the work vehicle that has been selected by the user.

### <Supplementary Note 2>

The display control method according to supplementary note 1, wherein
the predetermined information includes at least one of information related to a current surrounding environment of the work vehicle, information related to a current travel status of the work vehicle, and information related to a current work status of the work vehicle.

### <Supplementary Note 3>

The display control method according to supplementary note 1 or 2, wherein
a map is displayed on the first screen, and
on the map, identification information of the work vehicle is displayed in a position that corresponds to a current position of the work vehicle.

### <Supplementary Note 4>

The display control method according to supplementary note 3, wherein
on the map, the identification information is displayed in a display mode that corresponds to a current state of the work vehicle.

### <Supplementary Note 5>

The display control method according to supplementary note 4, wherein
on the map, the display mode when the work vehicle is autonomously traveling and the display mode when the work vehicle has stopped autonomously traveling are different.

### <Supplementary Note 6>

The display control method according to any one of supplementary notes 1 to 5, wherein
on the second screen, a capture image of a surrounding area of the work vehicle that has been captured by a camera installed on the work vehicle is displayed.

### <Supplementary Note 7>

The display control method according to supplementary note 6, wherein
when the work vehicle detects an obstacle, a capture image among a plurality of capture images of the camera that includes the obstacle is identifiably displayed on the second screen.

### <Supplementary Note 8>

The display control method according to any one of supplementary notes 1 to 7, wherein
on the map, an icon image for each of a plurality of preregistered work vehicles is displayed in a display mode corresponding to a current state of the work vehicle, and
a capture image of a surrounding area of the work vehicle that has been captured by a camera installed on the work vehicle that has been selected by the user from among the plurality of work vehicles on the first screen is displayed on the second screen.

### <Supplementary Note 9>

The display control method according to any one of supplementary notes 1 to 8, wherein
on the first screen, identification information of a worker that has been preregistered with respect to the work vehicle is displayed in association with the identification information of the work vehicle.

### <Supplementary Note 10>

The display control method according to supplementary note 9, wherein
when the worker displayed on the first screen has been selected, an instruction screen that outputs a predetermined instruction to the worker is displayed.

### <Supplementary Note 11>

The display control method according to supplementary note 6, wherein
the capture image is displayed such that a portion of a vehicle body of the work vehicle appears in the capture image.

### <Supplementary Note 12>

The display control method according to any one of supplementary notes 1 to 11, wherein
when a switching request to a remote operation mode has been received by the operation terminal from a user, and a predetermined operation has been received by a remote operation device that can be remotely operated from a user in a state where a capture image of a surrounding area of the work vehicle that has been captured by a camera installed on the work vehicle is being displayed, switches to the remote operation mode.

### <Supplementary Note 13>

A display control method that controls display information of an operation terminal, the method comprising:
causing a first screen of the operation terminal to display a preregistered work vehicle; and
causing a second screen of the operation terminal to display predetermined information related to the work vehicle if the work vehicle performing autonomous travel detects an obstacle, or if the work vehicle autonomously travels in a specific area.

### <Supplementary Note 14>

A display control program that controls display information of an operation terminal, the display control program causing one or more processors to execute the steps of:
causing a first screen of the operation terminal to display a preregistered work vehicle so as to be selectable by a user; and
causing a second screen of the operation terminal to display predetermined information related to the work vehicle that has been selected by the user.

### <Supplementary Note 15>

A display control system that controls display information of an operation terminal, the display control system comprising:
a first display processing unit that causes a first screen of the operation terminal to display a preregistered work vehicle so as to be selectable by a user; and
a second display processing unit that causes a second screen of the operation terminal to display predetermined information related to the work vehicle that has been selected by the user.

### REFERENCE SIGNS LIST

1 Autonomous travel system
10 Work vehicle
11 Vehicle control device
12 Storage unit
15 Obstacle detection device
20 Operation terminal
21 Operation control unit
23 Operation display unit
53 Camera
54 Obstacle sensor
30 Remote operation device (operation terminal)
33 Display unit
34 Operation unit
111: Travel processing unit
211: Setting processing unit
212: Display processing unit (first display processing unit, second display processing unit)
213: Reception processing unit
A1 Icon image (identification information of work vehicle 10a)
A2 Frame image (identification information of work vehicle 10a)
B1 Icon image (identification information of work vehicle 10b)
B2 Frame image (identification information of work vehicle 10b)
C1 Icon image (identification information of worker X)
C2 Icon image (identification information of worker Y)
M1 Message (predetermined information)
P1 Selection screen (first screen)
P2 Information display screen (second screen)
P3 Instruction screen

## Claims

1. A display control method that controls display information of an operation terminal, the display control method comprising:
causing a first screen of the operation terminal to display a preregistered work vehicle so as to be selectable by a user; and
causing a second screen of the operation terminal to display predetermined information related to the work vehicle that has been selected by the user.

2. The display control method according to claim 1, wherein
the predetermined information includes at least one of information related to a current surrounding environment of the work vehicle, information related to a current travel status of the work vehicle, and information related to a current work status of the work vehicle.

3. The display control method according to claim 1, wherein
a map is displayed on the first screen, and
on the map, identification information of the work vehicle is displayed in a position that corresponds to a current position of the work vehicle.

4. The display control method according to claim 3, wherein
on the map, the identification information is displayed in a display mode that corresponds to a current state of the work vehicle.

5. The display control method according to claim 4, wherein
on the map, the display mode when the work vehicle is autonomously traveling and the display mode when the work vehicle has stopped autonomously traveling are different.

6. The display control method according to claim 1, wherein
on the second screen, a capture image of a surrounding area of the work vehicle that has been captured by a camera installed on the work vehicle is displayed.

7. The display control method according to claim 6, wherein
when the work vehicle detects an obstacle, a capture image among a plurality of capture images of the camera that includes the obstacle is identifiably displayed on the second screen.

8. The display control method according to claim 3, wherein
on the map, an icon image for each of a plurality of the preregistered work vehicles is displayed in a display mode corresponding to a current state of the work vehicle, and
a capture image of a surrounding area of the work vehicle that has been captured by a camera installed on the work vehicle corresponding to the icon image that has been selected by the user from among a plurality of the icon images on the first screen is displayed on the second screen.

9. The display control method according to claim 3, wherein
on the first screen, identification information of a worker that has been preregistered with respect to the work vehicle is displayed in association with the identification information of the work vehicle.

10. The display control method according to claim 9, wherein
when the worker displayed on the first screen has been selected, an instruction screen that outputs a predetermined instruction to the worker is displayed.

11. The display control method according to claim 6, wherein
the capture image is displayed such that a portion of a vehicle body of the work vehicle appears in the capture image.

12. The display control method according to claim 1, wherein
when a switching request to a remote operation mode has been received by the operation terminal from a user, and a predetermined operation has been received by a remote operation device that can be remotely operated from a user in a state where a capture image of a surrounding area of the work vehicle that has been captured by a camera installed on the work vehicle is being displayed, the display control method switches to the remote operation mode.

13. A display control method that controls display information of an operation terminal, the method comprising:
causing a first screen of the operation terminal to display a preregistered work vehicle; and
causing a second screen of the operation terminal to display predetermined information related to the work vehicle if the work vehicle performing autonomous travel detects an obstacle, or if the work vehicle autonomously travels in a specific area.

14. A display control program that controls display information of an operation terminal, the display control program causing one or more processors to execute the steps of:
causing a first screen of the operation terminal to display a preregistered work vehicle so as to be selectable by a user; and
causing a second screen of the operation terminal to display predetermined information related to the work vehicle that has been selected by the user.

15. A display control system that controls display information of an operation terminal, the display control system comprising:
a first display processing unit that causes a first screen of the operation terminal to display a preregistered work vehicle so as to be selectable by a user; and
a second display processing unit that causes a second screen of the operation terminal to display predetermined information related to the work vehicle that has been selected by the user.
